# EUROPEAN PATENT APPLICATION

(11) **EP 4 738 986 A1**
(43) Date of publication of application: **06.05.2026**
(21) Application number: 23943689.2
(22) Date of filing: 29.06.2023
(51) Int. Cl.: H04W 88/04, H04W 72/25, H04W 76/14

(54) **TERMINAL AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); SHICHIJO, Taichi, Tokyo 100-6150 (JP); NAGATA, Satoshi, Tokyo 100-6150 (JP)
(74) Representative: Hoffmann Eitle
(86) International application number: PCT/JP2023/024294
(87) International publication number: WO 2025/004298

(57) **Abstract**

A terminal includes: a reception unit configured to receive a broadcast signal from another terminal; and a transmission unit configured to transmit, to the another terminal, a request signal for becoming a subordinate. The reception unit receives, from the another terminal, an indication indicating that the terminal is to be a subordinate of the another terminal.

## Description

### TECHNICAL FIELD

The present invention relates to a terminal and a communication method in a wireless communication system.

### BACKGROUND ART

In LTE (Long Term Evolution) and LTE successor systems (e.g., LTE-A (LTE Advanced), NR (New Radio) (also referred to as 5G)), a D2D (Device to Device) technology in which terminals communicate directly with each other without using a base station is being discussed (e.g., Non-Patent Literature 1).

The D2D reduces traffic between a terminal and a base station and enables communication between the terminals even when base stations are unable to communicate during a disaster, etc. It is to be noted that although the D2D is referred to as "sidelink" in the 3GPP (registered trademark) (3rd Generation Partnership Project), the more generic term D2D is used in the present description. However, in the description of embodiments described below, sidelink is also used as needed.

The D2D communication is broadly classified into: D2D discovery for discovering other terminals capable of communication; and D2D communication (D2D direct communication, device to device direct communication, etc.) for direct communication between terminals. Hereinafter, when D2D communication and D2D discovery are not specifically distinguished, they are simply called D2D. In addition, a signal transmitted and received in the D2D is referred to as a D2D signal. Various use cases of V2X (Vehicle to Everything) services in NR are being discussed (e.g., Non-Patent Literature 2).

In addition, in NR Release 17 (for example, Non-Patent Literature 3), use of a frequency band that is higher than that of the conventional releases is being discussed. For example, applicable numerologies including subcarrier spacings, channel bandwidths, etc., physical layer design, and possible failures in actual wireless communication in the 52.6 GHz to 71 GHz frequency band have been discussed.

In a newly-operated frequency band in which higher frequencies that are higher than conventional frequencies are used, an unlicensed band is defined. In the unlicensed band, various regulations are specified, and, for example, an LBT (Listen before talk) is performed at the time of channel access (for example, Non-Patent Literature 4). In the higher frequency band, in a case of performing D2D communication, an operation adapted to the regulations in the unlicensed band is required.

### CITATION LIST

### Non-Patent Literature

Non-Patent Literature 1: 3GPP TS 38.211 V17.4.0 (2022-12)
Non-Patent Literature 2: 3GPP TR 22.886 V16.2.0 (2018-12)
Non-Patent Literature 3: 3GPP TS 38.306 V17.3.0 (2022-12)
Non-Patent Literature 4: 3GPP TS 37.213 V17.4.0 (2022-12)

### SUMMARY OF INVENTION

### TECHNICAL PROBLEM

In NR sidelink, mode 1 and mode 2 are specified as resource determination methods, the mode 1 being a method in which the base station schedules resource allocation for a terminal, and the mode 1 being a method in which the terminal autonomously selects a resource. In the future, in order to achieve sidelink communications used for various qualities of use cases by various UE types, an efficient control by the network is expected to be introduced.

The present invention has been made in view of the foregoing and is intended to implement an efficient sidelink communications based on the control by the network.

### SOLUTION TO PROBLEM

According to the disclosed technique, a terminal is provided. The terminal includes: a reception unit configured to receive a broadcast signal from another terminal; and a transmission unit configured to transmit, to the another terminal, a request signal for becoming a subordinate, based on the broadcast signal. The reception unit receives, from the another terminal, an indication indicating that the terminal is to be a subordinate of the another terminal.

### ADVANTAGEOUS EFFECTS OF INVENTION

According to the disclosed technique, the efficient sidelink communications can be implemented based on the control by the network.

### BRIEF DESCRIPTION OF DRAWINGS

[Fig. 1] is a drawing for describing V2X.
[Fig. 2] is a sequence diagram illustrating an operation example (1) of V2X.
[Fig. 3] is a sequence diagram illustrating an operation example (2) of V2X.
[Fig. 4] is a sequence diagram illustrating an operation example (3) of V2X.
[Fig. 5] is a sequence diagram illustrating an operation example (4) of V2X.
[Fig. 6] is a drawing illustrating an example of a sensing operation.
[Fig. 7] is a flowchart for describing an example of a preemption operation.
[Fig. 8] is a drawing illustrating an example of a preemption operation.
[Fig. 9] is a drawing illustrating an example of a partial sensing operation.
[Fig. 10] is a drawing for describing an example of periodic-based partial sensing.
[Fig. 11] is a drawing for describing an example of contiguous partial sensing.
[Fig. 12] is a drawing illustrating an example of a frequency range in an embodiment of the present invention.
[Fig. 13] is a drawing for describing an example (1) of LBT.
[Fig. 14] is a drawing for describing an example (2) of LBT.
[Fig. 15] is a drawing for describing an example (3) of LBT.
[Fig. 16] is a drawing for describing an example (1) of a wideband operation.
[Fig. 17] is a drawing for describing an example (2) of a wideband operation.
[Fig. 18] is a drawing for describing an example (3) of a wideband operation.
[Fig. 19] is a drawing for describing an example (4) of a wideband operation.
[Fig. 20] is a drawing for describing an example of the communication situation in an embodiment of the present invention.
[Fig. 21] is a flowchart for describing an example (1) of communications in an embodiment of the present invention.
[Fig. 22] is a flowchart for describing an example (2) of communications in an embodiment of the present invention.
[Fig. 23] is a drawing illustrating an example of a functional structure of a base station 10 in an embodiment of the present invention.
[Fig. 24] is a drawing illustrating an example of a functional configuration of a terminal 20 in an embodiment of the present invention.
[Fig. 25] is a drawing illustrating an example of a hardware structure of the base station 10 or the terminal 20 in an embodiment of the present invention.
[Fig. 26] is a drawing illustrating an example of a structure of a vehicle 2001 in an embodiment of the present invention.

### DESCRIPTION OF EMBODIMENTS

In the following, while referring to the drawings, one or more embodiments of the present invention will be described. It should be noted that the embodiments described below are examples. Embodiments of the present invention are not limited to the following embodiments.

In operations of a wireless communication system according to an embodiment of the present invention, a conventional technique will be used when it is appropriate. It should be noted that, although the conventional techniques may be the conventional LTE, the conventional techniques are not limited to the conventional LTE. Further, it is assumed that the term "LTE" used in the present specification has, unless otherwise specifically mentioned, a broad meaning including a scheme of LTE-Advanced and a scheme after LTE-Advanced (e.g., NR) or wireless LAN (Local Area Network).

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression that a radio parameter, or the like is "configured" may mean that a predetermined value is pre-configured, or may mean that a radio parameter indicated by a base station 10 or a terminal 20 is configured.

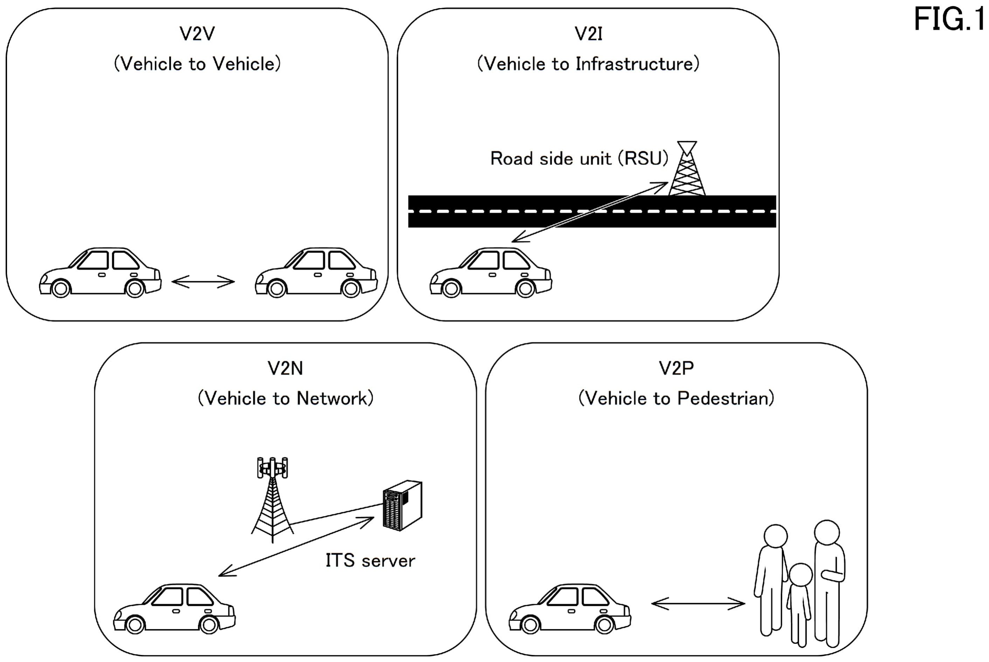

Fig. 1 is a drawing for describing V2X. In 3GPP, implementation of V2X (Vehicle to Everything) or eV2X (enhanced V2X) by enhancing the D2D functions is being discussed and the technical specifications are being developed. As illustrated in Fig. 1, V2X is a part of ITS (Intelligent Transport Systems) and is a collective name for: V2V (Vehicle to Vehicle) referring to a form of communication performed between vehicles; V2I (Vehicle to Infrastructure) referring to a form of communication performed between a vehicle and a road-side unit (RSU) that is installed on the roadside; V2N (Vehicle to Network) referring to a form of communication performed between a vehicle and an ITS server; and V2P (Vehicle to Pedestrian) referring to a form of communication performed between a vehicle and a mobile terminal that is carried by a pedestrian.

In addition, in 3GPP, V2X using LTE or NR cellular communications and device-to-device communications is being discussed. V2X using cellular communications is also referred to as cellular V2X. In NR V2X, discussions are being held on how to achieve higher system capacity, reduced latency, higher reliability, and QoS (Quality of Service) control.

With respect to LTE V2X or NR V2X, it is expected that discussions will go beyond the 3GPP specifications in the future. For example, the following items are expected to be discussed: how to secure interoperability; how to reduce cost by implementing higher layers; how to use or how to switch between multiple RATs (Radio Access Technologies); how to handle regulations of each country; how to obtain and distribute data of LTE V2X or NR V2X platform; and how to manage and use databases.

In an embodiment of the present invention, a form of embodiment is mainly assumed in which communication apparatuses are mounted on vehicles. However, an embodiment of the present invention is not limited to such a form. For example, communication apparatuses may be terminals carried by people, may be apparatuses mounted on drones or aircraft, or may be base stations, RSUs, relay stations (relay nodes), terminals capable of scheduling, etc.

It should be noted that SL (Sidelink) may be distinguished from UL (Uplink) or DL (Downlink) based on any one of, or any combination of the following 1) through 4). In addition, SL may be referred to as a different name.
1) Resource arrangement in the time domain
2) Resource arrangement in the frequency domain
3) Synchronization signal to be referred to (including SLSS (Sidelink Synchronization Signal))
4) Reference signal that is used for path loss measurement used for transmission power control

Further, with respect to OFDM (Orthogonal Frequency Division Multiplexing) of SL or UL, any of CP-OFDM (Cyclic-Prefix OFDM), DFT-S-OFDM (Discrete Fourier Transform-Spread-OFDM), OFDM without Transform precoding, and OFDM with Transform precoding may be applied.

In LTE SL, with respect to allocating SL resources to a terminal 20, Mode 3 and Mode 4 are defined. In Mode 3, transmission resources are dynamically allocated using a DCI (Downlink Control Information) that is transmitted from a base station 10 to the terminal 20. In addition, SPS (Semi Persistent Scheduling) is available in Mode 3. In Mode 4, the terminal 20 autonomously selects transmission resources from a resource pool.

It should be noted that a slot in an embodiment of the present invention may be read as (replaced with) a symbol, a mini slot, a subframe, a radio frame, or a TTI (Transmission Time Interval). Further, a cell in an embodiment of the present invention may be read as (replaced with) a cell group, a carrier component, a BWP (bandwidth part), a resource pool, a resource, a RAT (Radio Access Technology), a system (including a wireless LAN), etc.

It is to be noted that, in an embodiment of the present invention, the terminal 20 is not limited to a V2X terminal, and may be any type of terminal that performs D2D communication. For example, the terminal 20 may be a terminal carried by a user, such as a smartphone, or an IoT (Internet of Things) device, such as a smart meter.

In addition, it is expected that a HARQ (Hybrid automatic repeat request) is supported for unicast and groupcast of sidelink in NR-SL. In addition, in NR-V2X, SFCI (Sidelink Feedback Control Information) containing a HARQ response is defined. In addition, SFCI transmission via PSFCH (Physical Sidelink Feedback Channel) is under consideration.

It is to be noted that, in the following description, it is assumed that PSFCH is used in the transmission of HARQ-ACK in sidelink. However, this is merely an example. For example, PSCCH may be used to transmit HARQ-ACK in sidelink, PSSCH may be used to transmit HARQ-ACK in sidelink, or other channels may be used to transmit HARQ-ACK in sidelink.

Hereinafter, for the sake of convenience, information in general reported by the terminal 20 in HARQ is referred to as HARQ-ACK. This HARQ-ACK may also be referred to as HARQ-ACK information. In addition, more specifically, a codebook applied to the HARQ-ACK information reported from the terminal 20 to the base station 10 or the like is referred to as a HARQ-ACK codebook. The HARQ-ACK codebook defines a bit sequence of the HARQ-ACK information. It is to be noted that not only ACK but also NACK is transmitted by "HARQ-ACK".

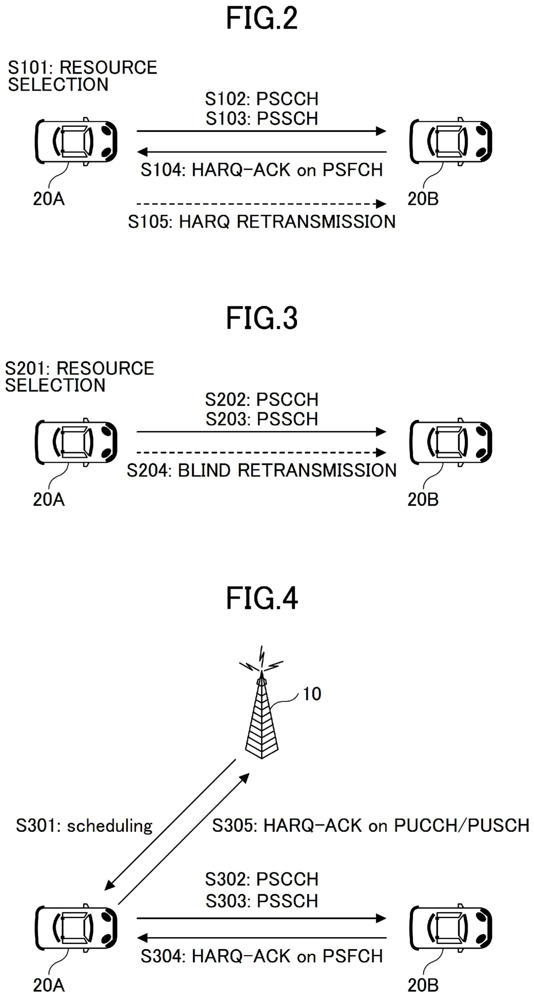

Fig. 2 is a sequence diagram illustrating an operation example (1) of V2X. As illustrated in Fig. 2, the wireless communication system related to an embodiment of the present invention may include a terminal 20A and a terminal 20B. Although there are many user devices in actuality, Fig. 2 shows only the terminal 20A and the terminal 20B as examples.

Hereinafter, when the terminals 20A, 20B, or the like are not particularly distinguished, the term "terminal 20" or "user device" will be used for the sake of convenience. Fig. 2 shows, for example, a case where both the terminal 20A and the terminal 20B are within a coverage of a cell. However, the operation in an embodiment of the present invention embodiment can be applied to a case where the terminal 20B is outside the coverage.

As described above, in an embodiment of the present invention, the terminal 20 is, for example, an apparatus mounted on a vehicle such as an automobile and has a cellular communication function to function as a UE in LTE or NR and a sidelink function. The terminal 20 may be a conventional portable terminal (such as a smartphone). In addition, the terminal 20 may be an RSU. The RSU may be a UE-type RSU having a function of a UE or a gNB-type RSU having a function of a base station apparatus.

Note that the terminal 20 need not be a device in a single housing. For example, even when various sensors are arranged and distributed in a vehicle, a device including the various sensors may be a terminal 20.

In addition, processing contents of sidelink transmission data of the terminal 20 are basically the same as those of UL transmission in LTE or NR. For example, the terminal 20 scrambles a codeword of the transmission data, modulates to generate complex-valued symbols, maps the complex-valued symbols to one or two layers, and performs precoding. Further, the precoded complex-valued symbols are mapped to a resource element to generate a transmission signal (e.g., complex-valued time-domain SC-FDMA signal), and the generated signal is transmitted from each antenna port.

It is to be noted that the base station 10 has a function of cellular communication to function as a base station in LTE or NR and a function of enabling communication of the terminal 20 according to an embodiment of the present invention (e.g., resource pool setting, resource allocation, etc.). In addition, the base station 10 may be an RSU (gNB-type RSU).

In addition, in the wireless communication system related to an embodiment of the present invention, a signal waveform used by the terminal 20 for SL or UL may be OFDMA, SC-FDMA, or other signal waveforms.

The terminal 20 transmits a sidelink synchronization signal block (S-SSB) as an SL synchronization signal. The S-SSB may include S-PSS (Sidelink Primary Synchronization Signal), S-SSS (Sidelink Secondary Synchronization Signal), and PSBCH (Physical Sidelink Broadcast Channel). It is to be noted that the names of S-SSB, S-PSS, S-SSS, and the like, are examples, and the names may be names other than S-SSB, S-PSS, S-SSS, and the like.

The terminal 20 transmits S-SSB to another terminal 20, based on a signal received from the base station apparatus 10, a GNSS (Global Navigation Satellite System) signal, or a signal received from another terminal 20. It is to be noted that the terminal 20 may transmit autonomously determined S-SSB to another terminal 20 in a case where the terminal 20 cannot transmit S-SSB based on any signal from the base station apparatus 10, GNSS, and another terminal 20. The resource available for S-SSB may be a periodic slot and may be referred to as an S-SSB occasion.

In step S101, the terminal 20A autonomously selects a resource to be used for PSCCH and PSSCH from a resource selection window having a predetermined period. The resource selection window may be configured to the terminal 20 by the base station 10. Here, the predetermined period of the resource selection window may be specified by an implementation condition of the terminal such as a processing time or a maximum allowable packet delay time, or may be specified in advance by technical specifications, and the predetermined period may be referred to as a section in the time domain.

In step S102 and step S103, the terminal 20A transmits, using the resource autonomously selected in step S101, SCI (Sidelink Control Information) via PSCCH and/or PSSCH and transmits SL data via PSSCH. For example, the terminal 20A may transmit the PSCCH using a frequency resource that is adjacent to or is not adjacent to the PSSCH frequency resources with the same time resource as at least a portion of the time resources of the PSSCH.

The terminal 20B receives SCI (PSCCH and/or PSSCH) and SL data (PSSCH) transmitted from the terminal 20A. The received SCI may include information of a PSFCH resource for the terminal 20B to transmit HARQ-ACK corresponding to reception of the data. The terminal 20A may include information of an autonomously selected resource in the SCI to be transmitted. It is to be noted that the resource that can be used for PSFCH may be a periodic slot and a symbol near the end (except for the last symbol) in the slot, and may be referred to as a PSFCH occasion.

In step S104, the terminal 20B transmits HARQ-ACK corresponding to the received data to the terminal 20A by using the PSFCH resource specified by the received SCI.

In step S105, in a case where the HARQ-ACK received in step S104 indicates a request for retransmission, that is, in a case where the HARQ-ACK is NACK (negative response), the terminal 20A retransmits the PSCCH and PSSCH to the terminal 20B. The terminal 20A may retransmit the PSCCH and PSSCH by using an autonomously selected resource.

It is to be noted that in a case where HARQ control with HARQ feedback is not performed, step S104 and step S105 are not required to be performed.

Fig. 3 is a sequence diagram illustrating an operation example (2) of V2X. A blind retransmission without depending on the HARQ control for improving the transmission success rate or the reachable distance may be performed.

In step S201, the terminal 20A autonomously selects a resource to be used for PSCCH and PSSCH from a resource selection window having a predetermined period. The resource selection window may be configured to the terminal 20 by the base station 10.

In step S202 and step S203, the terminal 20A transmits SCI via PSCCH and/or PSSCH, and transmits SL data via PSSCH, by using resources autonomously selected in step S201. For example, the terminal 20A may transmit the PSCCH using a frequency resource that is adjacent to the PSSCH frequency resources with the same time resource as at least a portion of the time resources of the PSSCH.

In step S204, the terminal 20A retransmits the SCI via PSCCH and/or PSSCH and the SL data via PSSCH to the terminal 20B, by using resources autonomously selected in step S201. The retransmission in step S204 may be performed multiple times.

Note that, if the blind retransmission is not performed, step S204 need not be performed.

Fig. 4 is a sequence diagram illustrating an operation example (3) of V2X. The base station 10 may perform scheduling of the sidelink. That is, the base station 10 may determine a sidelink resource to be used by the terminal 20 and transmit information indicating the resource to the terminal 20. In addition, in a case where HARQ control with HARQ feedback is applied, the base station 10 may transmit information indicating a PSFCH resource to the terminal 20.

In step S301, the base station 10 performs SL scheduling by sending DCI (Downlink Control Information) to the terminal 20A via PDCCH. Hereafter, for the sake of convenience, the DCI for SL scheduling is referred to as SL scheduling DCI.

In addition, in step S301, it is assumed that the base station 10 also transmits DCI for DL scheduling (which may be also referred to as DL assignment) to the terminal 20A via PDCCH. Hereafter, for the sake of convenience, the DCI for DL scheduling is referred to as D L scheduling DCI. The terminal 20A that has received the DL scheduling DCI receives DL data via PDSCH by using a resource specified by the DL scheduling DCI.

In step S302 and step S303, the terminal 20A transmits, using the resource specified by the SL scheduling DCI, SCI (Sidelink Control Information) via PSCCH and/or PSSCH and transmits SL data via PSSCH. It is to be noted that, in the SL scheduling DCI, only a PSSCH resource may be specified. In this case, for example, the terminal 20A may transmit the PSCCH by using a frequency resource that is adjacent to the PSSCH frequency resources with the same time resource as at least a portion of the time resources of the PSSCH.

The terminal 20B receives SCI (PSCCH and/or PSSCH) and SL data (PSSCH) transmitted from the terminal 20A. The SCI received via PSCCH and/or PSSCH includes resource information of PSFCH for the terminal 20B to transmit HARQ-ACK corresponding to reception of the data.

The resource information is included in the DL scheduling DCI or SL scheduling DCI transmitted from the base station 10 in step S301, and the terminal 20A acquires the resource information from the DL scheduling DCI or SL scheduling DCI and includes the acquired information in the SCI. Alternatively, the resource information may be omitted in the DCI transmitted from the base station 10 and the terminal 20A may autonomously include the resource information in the SCI to be transmitted.

In step S304, the terminal 20B transmits HARQ-ACK corresponding to the received data to the terminal 20A by using the PSFCH resource specified by the received SCI.

In step S305, the terminal 20A transmits the HARQ-ACK using, for example, a PUCCH (Physical uplink control channel) resource specified by the DL scheduling DCI (or SL scheduling DCI) at the timing (e.g., slot-by-slot timing) specified by the DL scheduling DCI (or SL scheduling DCI), and the base station 10 receives the HARQ-ACK. The HARQ-ACK codebook may include both: HARQ-ACK received from the terminal 20B or HARQ-ACK generated based on PSFCH that is not received; and HARQ-ACK corresponding to the DL data. Note that the HARQ-ACK corresponding to the DL data is not included in a case where there is no DL data allocation. In NR Rel. 16, the HARQ-ACK codebook does not include HARQ-ACK corresponding to DL data.

It is to be noted that in a case where HARQ control with HARQ feedback is not performed, step S304 and/or step S305 are/is not required to be performed.

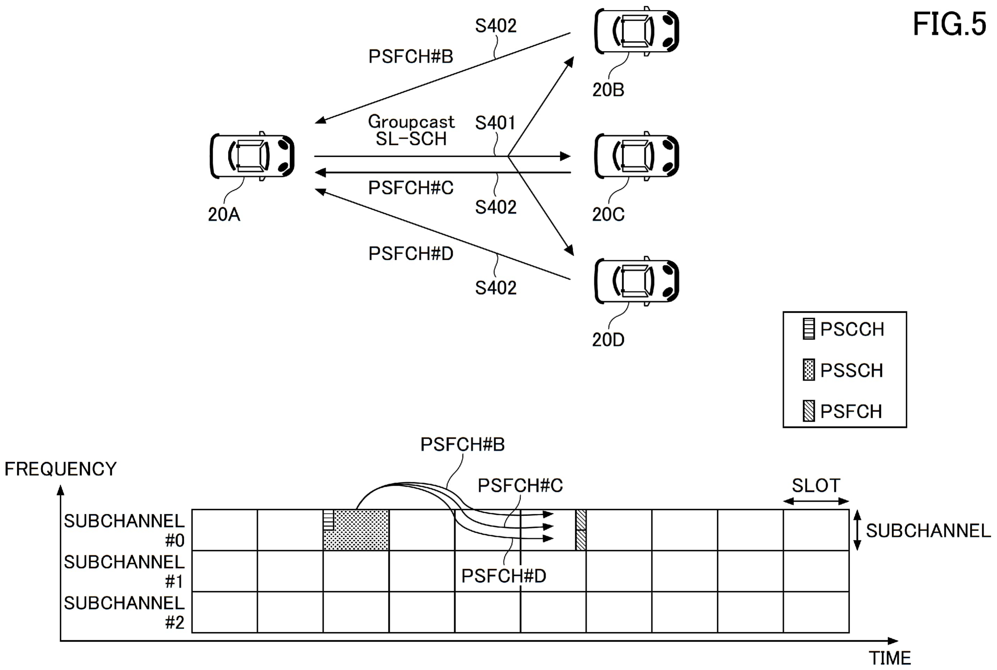

Fig. 5 is a sequence diagram illustrating an operation example (4) of V2X. As described above, in the NR sidelink, the HARQ response is supported to be transmitted via PSFCH. Note that, with respect to the format of PSFCH, the same format as that of PUCCH (Physical Uplink Control Channel) format 0 can be used, for example. That is, the PSFCH format may be a sequence-based format with a PRB (Physical Resource Block) size of 1, with ACK and NACK being identified by the difference of sequences and/or cyclic shifts. The format of PSFCH is not limited to the above-described format. PSFCH resources may be located at the last symbol of a slot or a plurality of end symbols of a slot. In addition, a period N may be configured or predefined for the PSFCH resources. The period N may be configured or predefined in units of slots.

In Fig. 5, the vertical axis corresponds to the frequency domain and the horizontal axis corresponds to the time domain. PSCCH may be located at the first symbol of a slot, may be located at a plurality of beginning symbols of a slot, or may be located at a plurality of symbols starting from a symbol other than the first symbol. PSFCH resources may be located at the last symbol of a slot, or may be located at a plurality of ending symbols of a slot. Note that consideration of a symbol for AGC (Automatic Gain Control) and a symbol for switching transmission/reception may be omitted for the above "beginning of a slot" and "ending of a slot". That is, for example, in a case where one slot is composed of 14 symbols, the "beginning of a slot" and the "ending of a slot" may respectively mean a first symbol and a last symbol among 12 symbols in which the original first symbol and the original last symbol are excluded. In an example shown in Fig. 5, three subchannels are configured in a resource pool, and two PSFCHs are arranged in a slot three slots after a slot in which PSSCH is arranged. An arrow from PSSCH to PSFCH indicates an example of PSFCH associated with PSSCH.

In a case of groupcast option 2 in which ACK or NACK is transmitted in a HARQ response in the NR-V2X groupcast, it is necessary to determine resources used for transmitting and receiving PSFCH. As shown in Fig. 5, in step S401, the terminal 20A that is a transmitting-side terminal 20 performs groupcast to the terminal 20B, the terminal 20C, and the terminal 20D that are receiving-side terminals 20 via SL-SCH (Sidelink Shared Channel). In subsequent step S402, the terminal 20B uses PSFCH#B, the terminal 20C uses PSFCH#C, and the terminal 20D uses PSFCH#D to transmit HARQ responses to the terminal 20A. Here, as shown in an example of Fig. 5, in a case where the number of PSFCH resources available is less than the number of receiving-side terminals 20 belonging to the group, it is necessary to determine how to allocate the PSFCH resources. It is to be noted that the transmitting-side terminal 20 may obtain the number of the receiving-side terminals 20 in the groupcast. It is to be noted that, in the groupcast option 1, only NACK is transmitted as a HARQ response, and ACK is not transmitted.

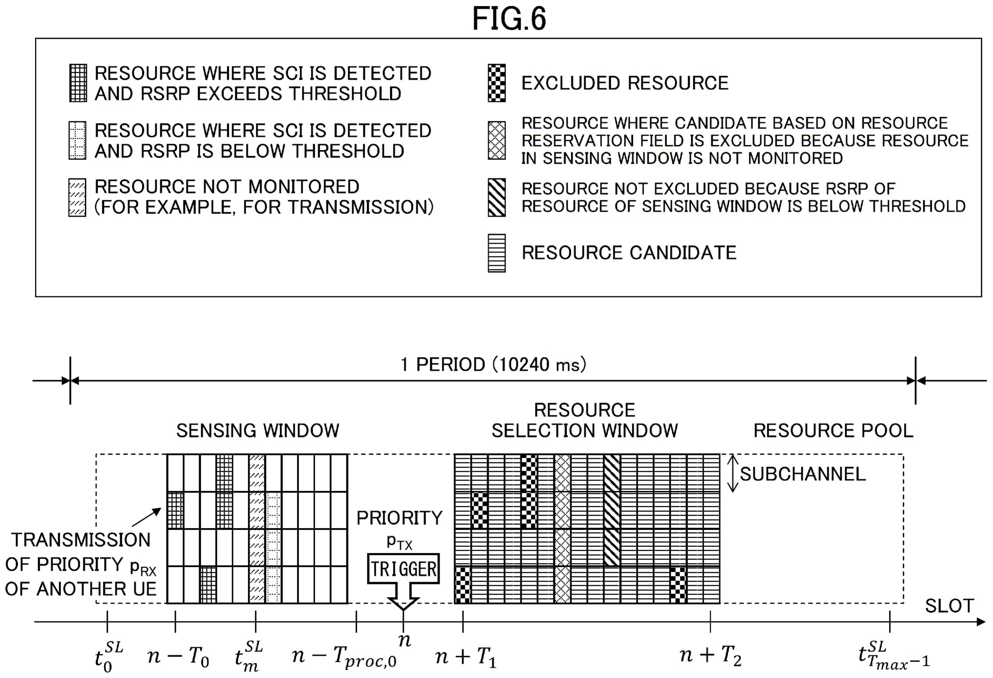

Fig. 6 is a drawing illustrating an example of a sensing operation in NR. In the resource allocation mode 2, the terminal 20 selects a resource and performs transmission. As illustrated in Fig. 6, the terminal 20 performs sensing in a sensing window in a resource pool. According to the sensing, the terminal 20 receives a resource reservation field or a resource assignment field included in SCI transmitted from another terminal 20, and identifies available resource candidates in a resource selection window in the resource pool, based on the received field. Subsequently, the terminal 20 randomly selects a resource from the available resource candidates.

Further, as shown in Fig. 6, the configuration of the resource pool may have a period. For example, the period may be a period of 10,240 milliseconds. Fig. 6 is an example in which slots from slot t₀^{SL} to slot t_{TmaX-1}^{SL} are configured as a resource pool. The resource pool in each cycle may have an area configured by, for example, a bitmap.

In addition, as illustrated in Fig. 6, it is assumed that a transmission trigger in the terminal 20 occurs in a slot n and the priority of the transmission is p_{TX}. In the sensing window from slot n-T₀ to the slot immediately before the slot n-T_{proc,0}, the terminal 20 can detect, for example, that another terminal 20 is performing transmission having priority p_{RX}. In a case where SCI is detected in the sensing window and the RSRP (Reference Signal Received Power) exceeds a threshold value, the resource in the resource selection window corresponding to the SCI is excluded. In addition, in a case where SCI is detected in the sensing window and the RSRP is less than the threshold value, the resource in the resource selection window corresponding to the SCI is not excluded. The threshold value may be, for example, a threshold value Th_{pTX, pRX} configured or defined for each resource in the sensing window, based on the priority p_{TX} and the priority p_{RX}.

In addition, a resource in the resource selection window that is a candidate of resource reservation information corresponding to a resource that is not monitored in the sensing window due to transmission, such as the slot tₘ^{SL} shown in Fig. 6, is excluded.

In the resource selection window from slots n+T₁ to n+T₂, as shown in Fig. 6, resources occupied by other UEs are identified, and resources from which the identified resources are excluded become available resource candidates. Assuming that the set of available resource candidates is S_{A}, in a case where S_{A} is less than 20% of the resource selection window, the resource identification may be performed again by raising the threshold value Th_{pTX, pRX} configured for each resource in the sensing window by 3 dB. That is, by raising the threshold value Th_{pTX, pRX} and performing the resource identification again, resources that are not excluded because of the RSRP being below the threshold value may be increased, and the set S_{A} of resource candidates may become greater than or equal to 20% of the resource selection window. The operation of raising the threshold value Th_{pTX, pRX} configured for each resource in the sensing window by 3 dB, and of performing the resource identification again in a case where the S_{A} is less than 20% of the resource selection window, may be repeatedly performed.

The lower layer of the terminal 20 may report the S_{A} to the higher layer. The higher layer of the terminal 20 may perform random selection for the S_{A} to determine a resource to be used. The terminal 20 may perform sidelink transmission using the determined resource. For example, the higher layer may be a MAC layer, and the lower layer may be a PHY layer or a physical layer.

Although an operation of the transmission-side terminal 20 has been described with reference to Fig. 6, the reception-side terminal 20 may detect data transmission from another terminal 20, based on a result of sensing or partial sensing and receive data from the other terminal 20.

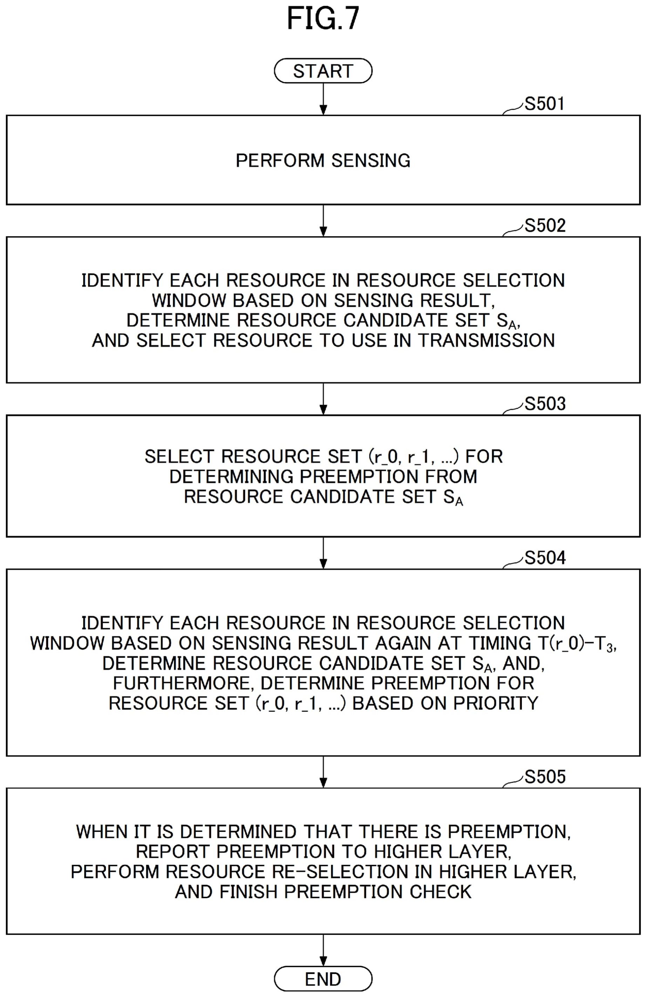

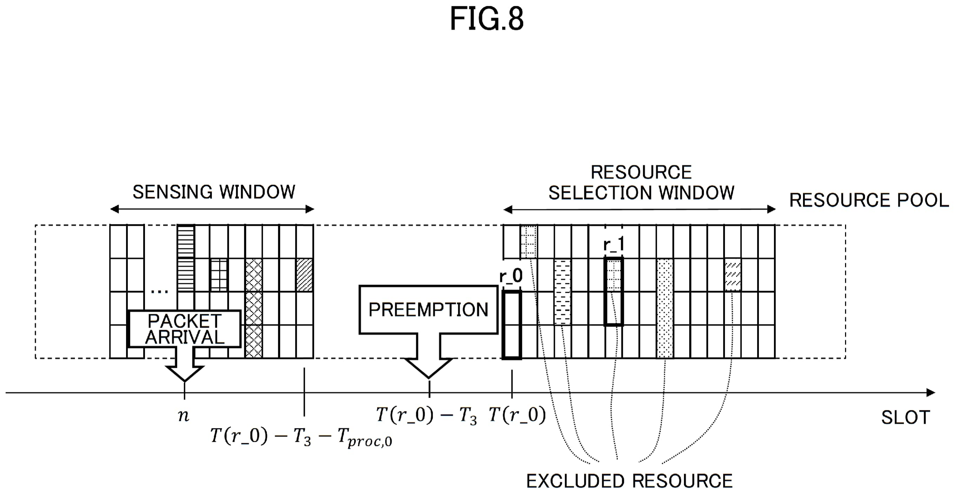

Fig. 7 is a flowchart illustrating an example of preemption in NR. Fig. 8 is a diagram illustrating an example of preemption in NR. In step S501, the terminal 20 performs sensing in the sensing window. In a case where the terminal 20 performs a power saving operation, the sensing may be performed in a limited period specified in advance. Subsequently, the terminal 20 identifies each resource in the resource selection window, based on the sensing result, determines a set S_{A} of resource candidates, and selects a resource to be used for transmission (S502). Subsequently, the terminal 20 selects a resource set (r_0, r_1, ...) for determining preemption from the set S_{A} of resource candidates (S503). The resource set may be indicated from the higher layer to the PHY layer as a resource for determining whether preemption has been performed.

In step S504, at the timing of T(r_0)-T₃ shown in Fig. 8, the terminal 20 again identifies each resource in the resource selection window, based on the sensing result to determine the set S_{A} of resource candidates, and further determines preemption for the resource set (r_0, r_1, ...), based on the priority. For example, with respect to r_1 illustrated in Fig. 8, the SCI transmitted from the other terminal 20 is detected by repeated sensing, and r_1 is not included in S_{A}. In a case where the preemption is enabled, in a case where the value prio_RX indicating the priority of the SCI transmitted from the other terminal 20 is lower than the value prio_TX indicating the priority of the transport block to be transmitted from the terminal 20 itself, the terminal 20 determines that the resource r_1 has been preempted. Note that the lower the value indicating the priority, the higher the priority. That is, in a case where the value prio_RX indicating the priority of the SCI transmitted from the other terminal 20 is higher than the value prio_TX indicating the priority of the transport block to be transmitted from the terminal 20 itself, the terminal 20 does not exclude the resource r_1 from the S_{A}. Alternatively, in a case where the preemption is enabled only for a specific priority (for example, sl-PreemptionEnable is pl1, pl2, ..., or pl8), the priority is referred to as prio_pre. Here, in a case where the value prio_RX indicating the priority of the SCI transmitted from the other terminal 20 is lower than prio_pre, and where the value prio_RX is lower than the value prio_TX indicating the priority of the transport block to be transmitted from the terminal 20 itself, the terminal 20 determines that the resource r_1 has been preempted.

In step S505, in a case where it is determined that there is preemption in step S504, the terminal 20 indicates the preemption to the higher layer, reselects resources at the higher layer, and ends the preemption check.

Note that, in a case where reevaluation is performed instead of the preemption check, in step S504, after determining the set S_{A} of resource candidates, in a case where the S_{A} does not include resources of the resource set (r_0, r_1, ...), the resource is not used and the resource reselection is performed at the higher layer.

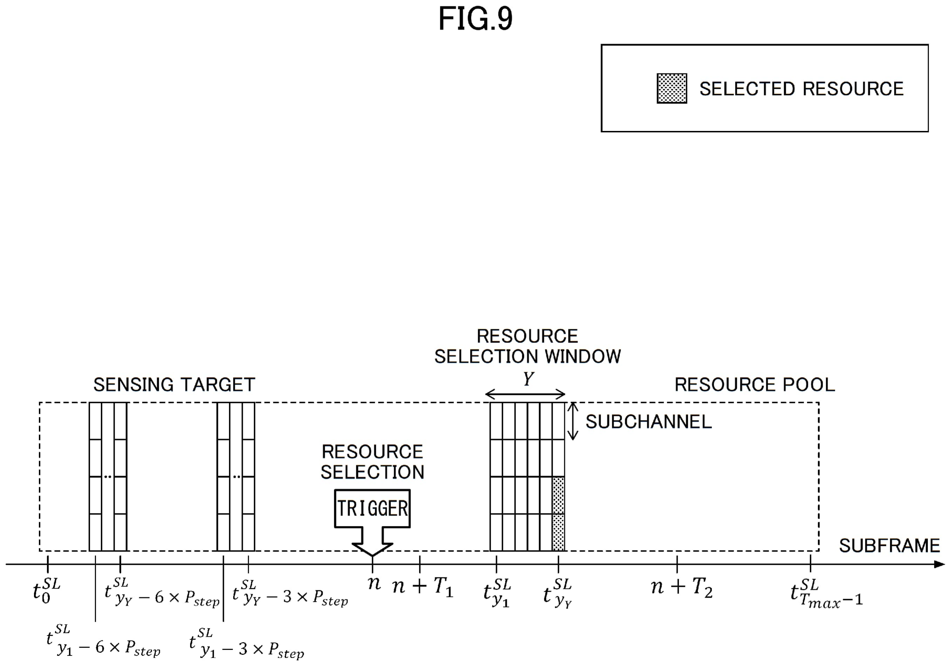

Fig. 9 is a drawing illustrating an example of a partial sensing operation in LTE. In a case where the partial sensing is configured by the higher layer in the LTE sidelink, the terminal 20 selects resources and performs transmission as shown in Fig. 9. As shown in Fig. 9, the terminal 20 performs partial sensing for a part of the sensing window in the resource pool, i.e., the sensing target. According to the partial sensing, the terminal 20 receives the resource reservation field contained in the SCI transmitted from another terminal 20 and identifies the available resource candidates in the resource selection window in the resource pool, based on the field. Subsequently, the terminal 20 randomly selects a resource from the available resource candidates.

Fig. 9 is an example in which subframes from subframe t₀^{SL} to subframe t_{Tmax-1}^{SL} are configured as a resource pool. The resource pool may have a target area configured by a bitmap, for example. As shown in Fig. 9, the transmission trigger at the terminal 20 is assumed to occur in subframe n. As shown in Fig. 9, among the subframes from subframe n+T₁ to subframe n+T₂, Y subframes from subframe t_{y1}^{SL} to subframe t_{yY}^{SL} may be configured as the resource selection window.

The terminal 20 can detect, for example, that another terminal 20 is performing transmission in one or more sensing targets from subframe t_{y1-k×Pstep}^{SL} to subframe t_{yY-k×Pstep}^{SL}, the length being Y subframes. The k may be determined by a 10-bit bitmap, for example. Fig. 9 shows an example in which the third and sixth bits of the bitmap are configured to "1" indicating that the partial sensing is to be performed. That is, in Fig. 9, subframes from subframe t_{y1-6×Pstep}^{SL} to subframe t_{yY-6×Pstep}^{SL}, and subframes from subframe t_{y1-3×Pstep}^{SL} to subframe t_{yY-3×Pstep}^{SL} are configured as the sensing targets. As described above, the k-th bit of the bitmap may correspond to a sensing window from subframe t_{y1-k×Pstep}^{SL} to subframe t_{yY-k×Pstep}^{SL}. Note that yᵢ corresponds to the index (1...Y) in the Y subframes.

It is to be noted that k may be configured in a 10-bit bitmap or defined in advance, and Pₛₜₑₚ may be 100 ms. It is to be noted that, in a case where SL communication is performed using DL and UL carriers, Pₛₜₑₚ may be (U/(D+S+U))*100 ms. U corresponds to the number of UL subframes, D corresponds to the number of DL subframes, and S corresponds to the number of special subframes.

In a case where SCI is detected in the above-described sensing target and the RSRP exceeds the threshold value, the resource in the resource selection window corresponding to the resource reservation field of the SCI is excluded. In addition, in a case where SCI is detected in the sensing target and the RSRP is less than the threshold value, the resource in the resource selection window corresponding to the resource reservation field of the SCI is not excluded. The threshold value may be, for example, a threshold value Th_{pTX, pRX} configured or defined for each resource in the sensing target, based on the transmission-side priority pᵣₓ and the reception-side priority p_{RX}.

As shown in Fig. 9, in a resource selection window configured in the Y subframes in the section [n+T₁, n+T₂], the terminal 20 identifies a resource occupied by another UE, and the resources, excluding the identified resource, become available resource candidates. Note that the Y subframes need not be contiguous. Assuming that the set of available resource candidates is S_{A}, in a case where S_{A} is less than 20% of the resource selection window, the resource identification may be performed again by raising the threshold value Th_{pTX, pRX} configured for each resource in the sensing window by 3 dB.

That is, resources that are not excluded because of the RSRP being less than the threshold value may be increased by raising the threshold value Th_{pTX, pRX} and by performing the resource identification again. Furthermore, the RSSI of each resource in the S_{A} may be measured and the resource with the lowest RSSI may be added to the set S_{B}. The operation of adding the resource with the lowest RSSI included in the S_{A} to the S_{B} may be repeated until the set S_{B} of resource candidates becomes equal to or greater than 20% of the resource selection window.

The lower layer of the terminal 20 may report the S_{B} to the higher layer. The higher layer of the terminal 20 may perform random selection for the S_{B} to determine a resource to be used. The terminal 20 may perform sidelink transmission using the determined resource. Note that the terminal 20 may use the resource periodically without performing the sensing for a predetermined number of times (e.g., Cᵣₑₛₑₗ times) once the resource is secured.

Here, power saving based on random resource selection and partial sensing is described in the technical specifications in NR sidelink. The terminal 20 to which partial sensing is applied performs reception and sensing only in specific slots in the sensing window. In other words, the terminal 20 may perform partial sensing in which resource identification is performed by sensing only limited resources as compared to full sensing, and in which resource selection from the identified resource set is performed. Further, the terminal 20 may, without excluding resources from the resources in the resource selection window, cause the resources in the resource selection window to be an identified resource set and may perform random selection to select a resource from the identified resource set.

Note that the method of: performing random selection at the time of resource selection; and using sensing information at the time of reevaluation or preemption checking, may be treated as partial sensing or as random selection.

The following 1) and 2) may be applied as an operation in sensing. It is to be noted that the sensing and the monitoring may be interchangeably used, and at least one of: measurement of received RSRP; acquisition of reserved resource information; or acquisition of priority information, may be included in the operation.

### 1) Periodic-based partial sensing

Operation of determining the sensing slots, based on the reservation periodicity in a mechanism in which sensing is performed only for some slots. Note that the reservation periodicity is a value related to the resource reservation period field. The period may be replaced by the periodicity.

### 2) Contiguous partial sensing

Operation of determining the sensing slots, based on an aperiodic reservation in a mechanism in which sensing is performed only for some slots. Note that the aperiodic reservation is a value related to the time resource assignment field.

In addition, a plurality of resource allocation methods may be configured for a resource pool. In addition, SL-DRX (Discontinuous reception) is supported as one of the power-saving functions. That is, the reception operation is performed only for a predetermined time period.

As described above, partial sensing is supported as one of the power-saving functions. In a resource pool in which partial sensing is configured, the terminal 20 may perform the periodic-based partial sensing described above. The terminal 20 may receive, from the base station 10, information for configuring a resource pool in which partial sensing is configured and in which periodic reservation is configured to be enabled.

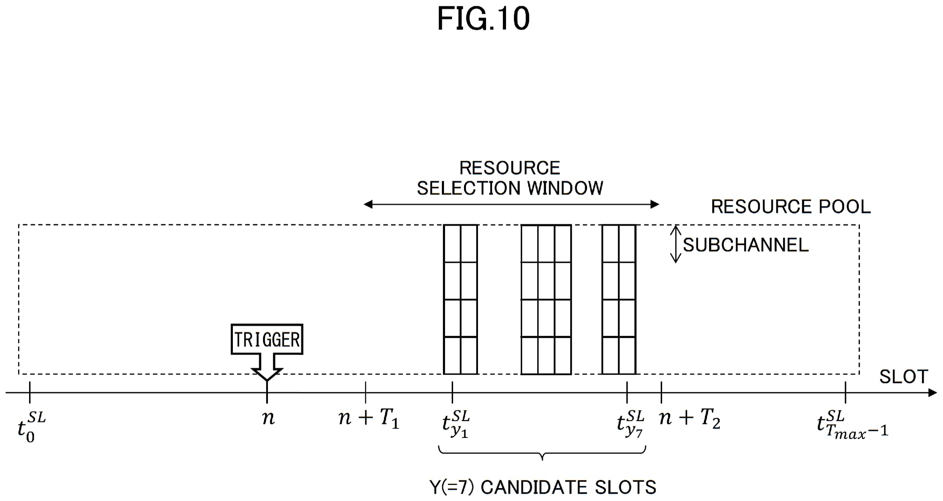

Fig. 10 is a drawing illustrating an example of periodic-based partial sensing. As shown in Fig. 10, Y candidate slots for resource selection are selected from a resource selection window [n+T₁, n+T₂].

Assuming that t_{y}^{SL} is a slot included in the Y candidate slots, sensing may be performed by having t_{y-k×Preserve}^{SL} as a target slot of the periodic-based partial sensing.

The Pᵣₑₛₑᵣᵥₑ may correspond to any value included in sl-ResouceReservePeriodList that is configured or predefined. Alternatively, a value of Pᵣₑₛₑᵣᵥₑ that is limited to a subset of sl-ResouceReservePeriodList may be configured or predefined. The Pᵣₑₛₑᵣᵥₑ and sl-ResouceReservePeriodList may be configured for each transmission resource pool of the resource allocation mode 2. In addition, as a UE implementation, a period included in sl-ResouceReservePeriodList other than the limited subset, may be monitored. For example, the terminal 20 may additionally monitor an occasion corresponding to P_RSVP_Tx.

Regarding the k value, the terminal 20 may monitor the latest sensing occasion in a certain reservation period that is: before slot n of the resource selection trigger; or before the first slot of the Y candidate slots subject to a processing time limitation. In addition, the terminal 20 may additionally monitor a periodic sensing occasion corresponding to a set of one or more k values. For example, as the k value, a value corresponding to the latest sensing occasion in a certain reservation period that is: before slot n of the resource selection trigger; or before the first slot of the Y candidate slots subject to the processing time limitation, and a value corresponding to the sensing occasion immediately before the latest sensing occasion in the certain reservation period, may be configured.

As described above, partial sensing is supported as one of the power-saving functions. In a resource pool in which partial sensing is configured, the terminal 20 may perform the contiguous partial sensing described above. The terminal 20 may receive, from the base station 10, information for configuring a resource pool in which partial sensing is configured and in which aperiodic reservation is configured to be enabled.

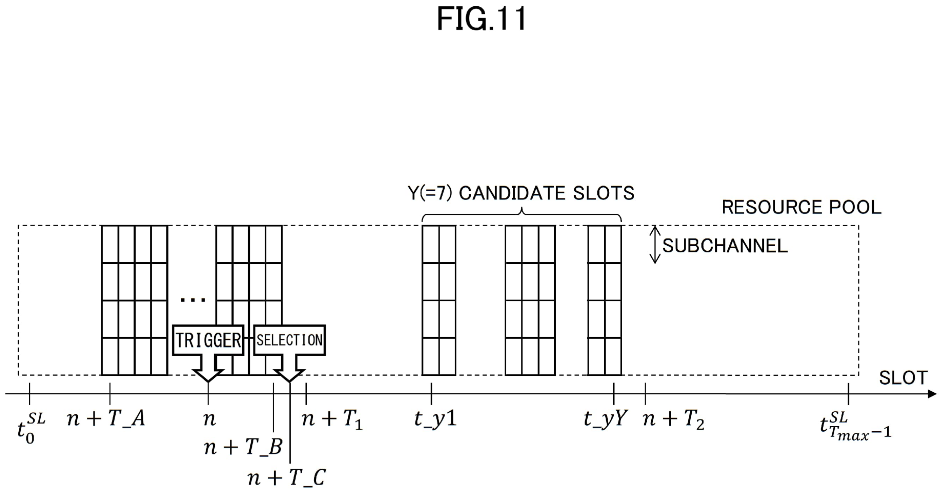

Fig. 11 is a drawing illustrating an example of contiguous partial sensing. As shown in Fig. 11, in a case where the trigger for resource selection is slot n, the terminal 20 selects the Y candidate slots for resource selection from the resource selection window [n+T₁, n+T₂]. Fig. 11 is an example for the case of Y = 7. As shown in Fig. 11, the beginning of the Y candidate slots is denoted as slot t_{y1}, the subsequent slot is denoted as t_{y2}, ..., and the ending of the Y candidate slots is denoted as slot t_{yY}.

The terminal 20 performs sensing in the section [n+T_{A}, n+T_{B}] and performs resource selection at n+T_{B} or after n+T_{B} (referred to as n+T_{C}). Note that the periodic-based partial sensing described above may be additionally performed. Note that T_{A} and T_{B} of the section [n+T_{A}, n+T_{B}] may be any value. In addition, n may be replaced with an index of a slot from among the Y candidate slots.

In addition, the mark [ may be replaced with the mark (, and the mark ] may be replaced with the mark ). Note that, for example, the section [a, b] is a section from a slot a to a slot b, and includes the slot a and the slot b. For example, the section (a, b) is a section from a slot a to a slot b, and does not include the slot a and the slot b.

Note that, candidate resources that are targets of resource selection are described as Y candidate slots, and all slots or some slots in the section [n+T₁, n+T₂] may be candidate slots.

In addition, as a method of improving the reliability and the delay performance, the inter-terminal coordination is described in the technical specifications. For example, the inter-terminal coordination method 1 and the inter-terminal coordination method 2 as shown below have been developed into the technical specifications. Hereinafter, the terminal 20 that transmits coordination information is described as UE-A, and the terminal 20 that receives the coordination information is described as UE-B.
Inter-terminal coordination method 1) A preferred resource set and/or a non-preferred resource set for transmission by the UE-B is transmitted from the UE-A to the UE-B. Hereinafter, the inter-terminal coordination method 1 is also described as the IUC scheme 1 (Inter-UE coordination scheme 1).
Inter-terminal coordination method 2) In a resource indicated by SCI that is received from the UE-B, the UE-A transmits, to the UE-B, information indicating: an expectation of a collision with another transmission or reception; and/or a resource in which the collision is detected. The information may be transmitted via PSFCH. Hereinafter, the inter-terminal coordination method 2 is also described as the IUC scheme 2 (Inter-UE coordination scheme 2).

With respect to the 3GPP Release 16 or Release 17 sidelink, technical specifications are being developed targeting 1) and 2) below.
1) Environment in the ITS (Intelligent Transport Systems) band in which there are only 3GPP terminals
2) Environment in the FR1 (Frequency range 1) and FR2 licensed band defined in NR in which UL resources can be used for SL

There have been discussions to newly target an unlicensed band for the sidelink of 3GPP Release 18 and later. For example, an unlicensed band such as the 5 GHz to 7 GHz band, 60 GHz band, or the like.

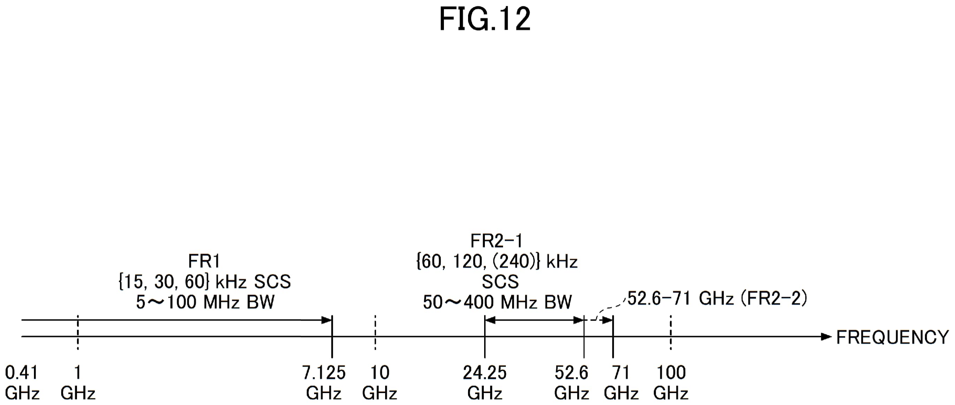

Fig. 12 is a drawing illustrating an example of a frequency band that is used in the wireless communication system. In the NR specifications of 3GPP Release 15 and Release 16, for example, an operation in a frequency band of 52.6 GHz or more is being discussed. It is to be noted that, as shown in Fig. 12, FR (Frequency range) 1 in which current operation is defined is a frequency band from 410 MHz to 7.125 GHz, SCS (Sub carrier spacing) is 15 kHz, 30 kHz, or 60 kHz, and bandwidth is from 5 MHz to 100 MHz.

FR2-1 is a frequency band from 24.25 GHz to 52.6 GHz, SCS is 60 kHz, 120 kHz or 240 kHz, and the bandwidth is from 50 MHz to 400 MHz. As illustrated in Fig. 12, FR2-2 may be assumed to be from 52.6 GHz to 71 GHz. Furthermore, a frequency band beyond 71 GHz may be assumed to be supported.

In a case of using a band exceeding 52.6 GHz, Cyclic Prefix-Orthogonal Frequency Division Multiplexing (CP-OFDM)/Discrete Fourier Transform - Spread (DFT-S-OFDM) having larger Sub-Carrier Spacing (SCS) may be applied.

In addition, in a high frequency band such as FR2-2, an increase in phase noise between carriers becomes a problem. Accordingly, application of larger (wider) SCS or a single-carrier waveform may be required.

For example, a band from 5.15 GHz to 5.35 GHz, a band from 5.47 GHz to 5.725 GHz, a band that is equal to or higher than 5.925 GHz, or the like is expected to be an example of an unlicensed band in the 5 GHz to 7 GHz band.

For example, a band from 59 GHz to 66 GHz, a band from 57 GHz to 64 GHz or 66 GHz, a band from 59.4 GHz to 62.9 GHz, or the like is expected as an example of an unlicensed band in the 60 GHz band.

In the unlicensed band, various regulations are specified so as to avoid influence on other systems or other devices.

For example, in the 5 GHz to 7 GHz band, an LBT (Listen before talk) is to be performed when accessing a channel. The base station 10 or the terminal 20 performs power detection in a predetermined period immediately before transmission, and stops the transmission in a case where the power exceeds a predetermined value, that is, in a case where transmission from another device is detected (may be referred to as LBT failure). In addition, the maximum channel occupancy time (MCOT) is specified. MCOT is a maximum time duration in which transmission continuation is allowed in a case where transmission is started after the LBT, and is 4 ms in Japan, for example.

In addition, in a case where the transmission uses a carrier bandwidth, X% or more of the bandwidth must be used as the occupied channel bandwidth (OCB) requirements. For example, in Europe, as much as 80% to 100% of NCB (nominal channel bandwidth) is required to be used. The purpose of the OCB requirements is for the channel access power detection to be performed properly.

In addition, with respect to the maximum transmission power and the maximum power spectral density, it is specified that the transmission is to be performed with predetermined transmission power or less in order to avoid excessive interference. For example, in Europe, the maximum transmission power is 23 dBm in the 5,150 MHz to 5,350 MHz band. In addition, for example, in Europe, the maximum power spectral density is 10 dBm/MHz in the 5,150 MHz to 5,350 MHz band.

For example, in the 60 GHz band, an LBT is to be performed when accessing a channel. The base station 10 or the terminal 20 performs power detection in a predetermined period immediately before transmission, and stops the transmission in a case where the power exceeds a predetermined value, that is, in a case where transmission from another device is detected. In addition, with respect to the maximum transmission power and the maximum power spectral density, it is specified that the transmission is to be performed with predetermined transmission power or less. In addition, the capability of satisfying the OCB requirements is specified.

There are four types of channel access procedures defined in NR as described below based on the behavior differences with respect to the LBT time direction (duration for performing sensing). It is to be noted that the above-described sensing is an operation different from the above-described sidelink sensing and will be referred to as the LBT sensing for the sake of distinction.
Type 1) Variable duration of LBT sensing is performed before transmission. Also referred to as category-4 LBT.
Type 2A) 25 µs of LBT sensing is performed before transmission. Also referred to as category-2 LBT.
Type 2B) 16 µs of LBT sensing is performed before transmission. Also referred to as category-2 LBT.
Type 2C) Start transmission without LBT. The same as the transmission in the licensed band.

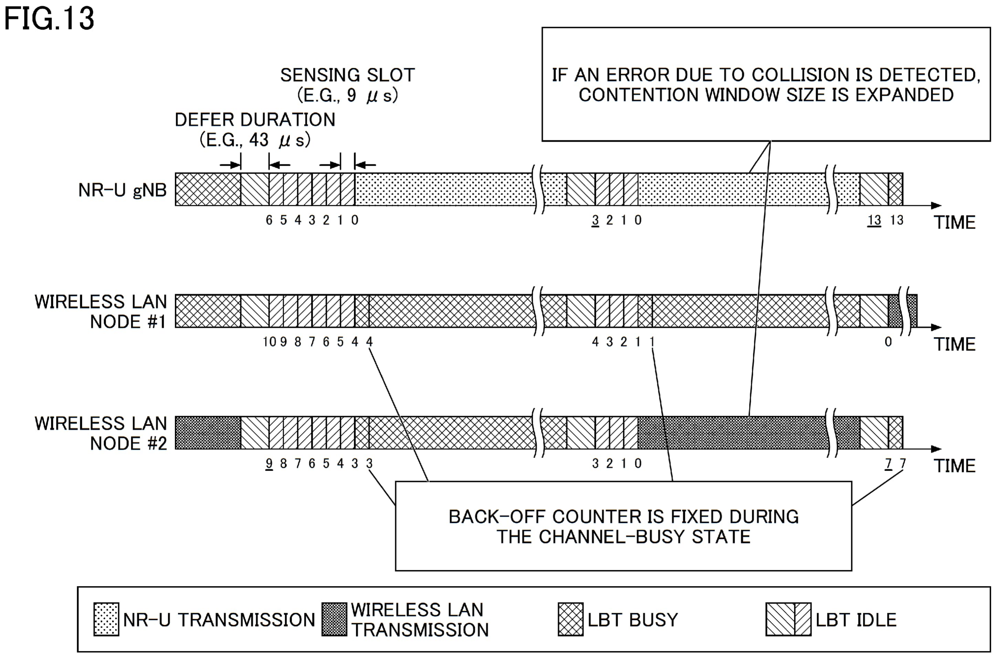

Fig. 13 is a drawing for describing an example (1) of LBT. Fig. 13 is an example of Type 1 channel access procedure. Type 1 is further classified into four classes indicating the channel access priority classes (CAPC) based on the LBT sensing length difference. LBT sensing is performed in the following two durations.

The first duration is a prioritization period or a defer duration, and has a length of 16+9×mₚ [µs]. With respect to mₚ, a fixed value is defined for each of the channel access priority classes.

The second duration is a backoff procedure, and has a length of 9×N [µs]. The value of N is randomly determined from a certain range (refer to the CWS adjustment procedure in Non-Patent Literature 4). N is an initial value of the backoff counter, and the value of the backoff counter decreases by one each time power of a signal of another device is not detected for a period of 9 [µs].

With respect to the above description, the 9 µs LBT sensing duration may be referred to as an LBT sensing slot duration.

In an example of Fig. 13, mₚ is equal to 3 and the defer duration is 43 µs. As illustrated in Fig. 13, the backoff counter is fixed during the channel-busy state. In addition, as illustrated in Fig. 13, in a case where an error is detected because of a transmission collision between NR-U gNB and the wireless LAN node #2, the contention window size (CWS) of the NR-U gNB is expanded from 3 to 13.

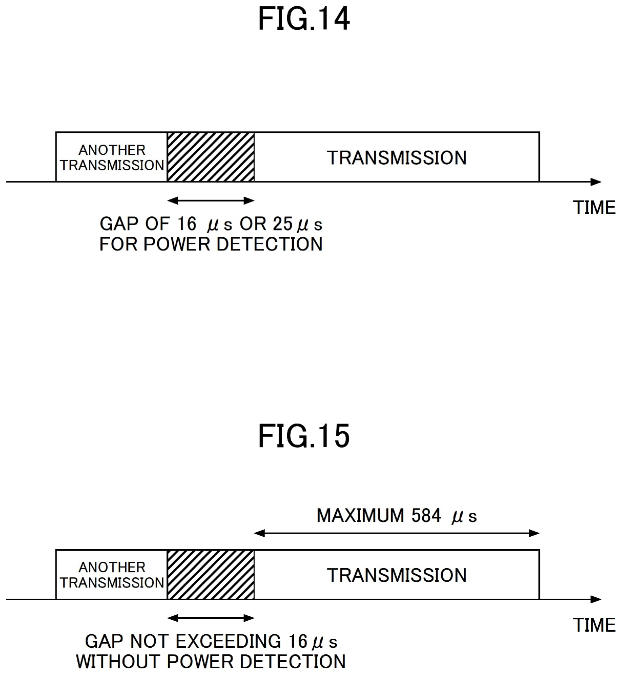

Fig. 14 is a drawing for describing an example (2) of LBT. Fig. 14 is an example of a Type 2A or Type 2B channel access procedure without random backoff. A gap for detecting power, 25 µs for Type 2A or 16 µs for Type 2B, is configured before the transmission.

Fig. 15 is a drawing for describing an example (3) of LBT. Fig. 15 is an example of a Type 2C channel access procedure. As illustrated in Fig. 15, power detection is not performed before a transmission, and the transmission is performed immediately after the gap that does not exceed 16 µs. The transmission duration may be up to 584 µs.

As described above, a plurality of LBT types are supported in NR-U. In the above-described Type 1, with respect to the initial value N of the backoff counter, a random value in a section between zero and CWₚ whose value range is determined based on the channel access priority class p is configured. Table 1 illustrates examples of: mₚ; CW_{p,min} that is a minimum value of CWₚ; and CW_{p,max} that is a maximum value of CWₚ, which are defined for each channel access priority class p in UL.

**[Table 1]**

| Class p | mₚ | CW_{min, p} | CWmax, p |
|---|---|---|---|
| 1 | 2 | 3 | 7 |
| 2 | 2 | 7 | 15 |
| 3 | 3 | 15 | 1023 |
| 4 | 7 | 15 | 1023 |

As illustrated in Table 1, mₚ, CW_{p,min}, and CW_{p,max} are determined according to the channel access priority class p. In a case where p is 1, the LBT duration calculated from Table 1 is 34 µs minimum and 88 µs maximum. In a case where p is 2, the LBT duration calculated from Table 1 is 34 µs minimum and 160 µs maximum. In a case where p is 3, the LBT duration calculated from Table 1 is 43 µs minimum and 9,286 µs maximum. In a case where p is 4, the LBT duration calculated from Table 1 is 79 µs minimum and 9,286 µs maximum. It is to be noted that Table 1 is a table used for UL.

The LBT type and the channel access priority class may be determined based on an indication from the base station 10, a channel type, or the like. The gap of 25 µs or 16 µs may be configured by the scheduling of the base station 10 by taking into account the TA (Timing Advance) and the CP extension.

The LBT applied for channel access is performed for each predetermined bandwidth (for example, 20 MHz). In a case where power is not detected in the LBT channel that includes each transmission, the transmission can be performed. It is to be noted that each CC in Uu may be defined by using a bandwidth that is wider than the LBT channel. In other words, the wideband operation is supported. It is to be noted that Uu is a radio interface between the UTRAN (Universal Terrestrial Radio Access Network) and UE (User equipment).

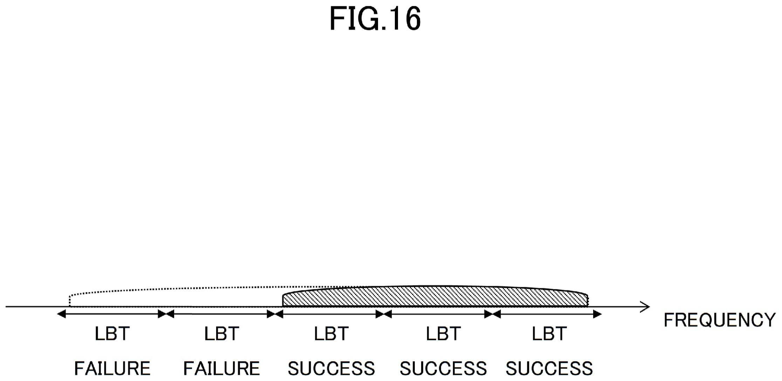

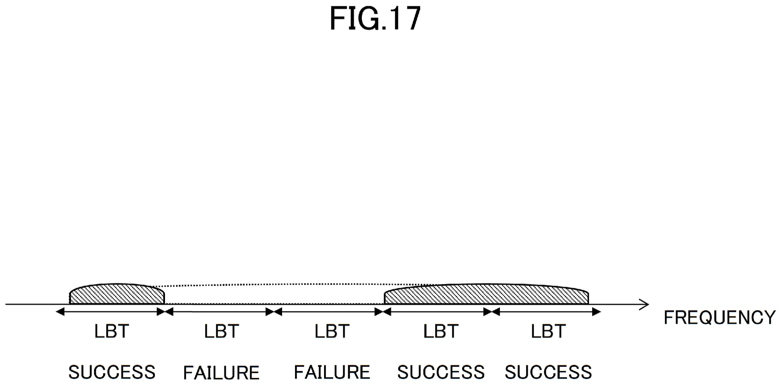

Fig. 16 is a drawing for describing an example (1) of a wideband operation. Fig. 17 is a drawing for describing an example (2) of a wideband operation. In a case of a wideband operation in an unlicensed band, as illustrated in Fig. 16 or Fig. 17, when LBTs in the gNB is successful for a part of or all of the LBT channel, transmission may be allowed in the LBT channel in which LBTs are successful. As illustrated in Fig. 16, the gNB may perform transmission of a single continuous block, or, as illustrated in Fig. 17, the gNB may perform transmission of a plurality of discontinuous blocks.

With respect to the DL in an unlicensed band, the DL type A and the DL type B are specified, an LBT being performed for each channel in the DL type A and the LBT type 1 being performed in the randomly selected channel and the LBT type 2A being performed in the remaining channels in the DL type B.

The DL type A is further classified into the type A1 and the type A2. In the type A1, the contention window CWp is determined for each channel. In the type A2, with respect to the CWp, the largest CWp among the CWps determined for respective channels is used.

The DL type B is further classified into the type B1 and the type B2. In the type B1, a single CWp is applied to all of the channels. In the type B2, the largest CWp among the CWps determined for respective channels is used.

In a case where the LBT is successful for a part of or all of the LBT channels in the gNB, the PDSCH transmission using an LBT channel with successful LBT is allowed. The gNB may perform transmission of a single block that is continuous in the frequency direction, or the gNB may perform transmission of a plurality of blocks that are discontinuous in the frequency direction.

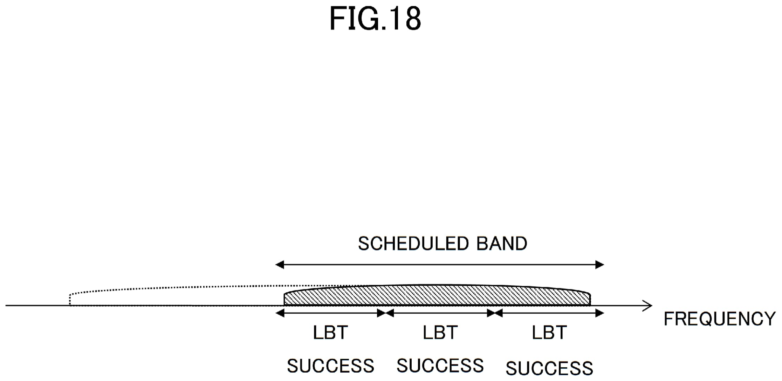

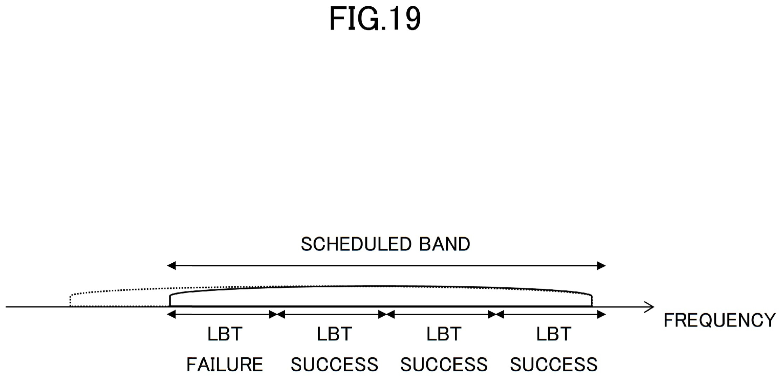

Fig. 18 is a drawing for describing an example (3) of a wideband operation. Fig. 19 is a drawing for describing an example (4) of a wideband operation. As illustrated in Fig. 18 or Fig. 19, the transmission may be allowed when the LBT in the UE is successful for all of the LBT channels in the scheduled band. As illustrated in Fig. 19, the transmission is not required to be allowed in a case where the LBT fails for a part of the LBT channels.

In the UL in an unlicensed band, the LBT type is determined according to an indication by the gNB. In a case where the LBT type 1 is indicated, the LBT type 2 is applied if an LBT that is similar to the DL type B is performed for the UL immediately before the transmission or the LBT type 1 is applied. In a case where an LBT fails in one of the LBT channels for the transmission, the UL transmission is not performed in any LBT channel. It is to be noted that the LBT channel may be referred to as an RB set. The LBT channel and the RB set may be interchangeable.

Here, in 5G-NR, the following two types are defined as resource determination methods for sidelink communications.

Mode 1: Resource allocation is performed based on scheduling by the gNB.

A certain level of communication quality can be achieved. However, it is difficult to obtain all of the channel status by the gNB, and thus, the Uu-level communication quality cannot be expected and there is a limitation that the communication must be performed in-coverage.

Mode 2: Resource selection is autonomously performed by the UE.

Communications can be performed ubiquitously at any location regardless of in-coverage or out-of-coverage by using the same method. However, the communication quality is low and the energy consumption is large.

As described above, there are drawbacks in the sidelink communication that have prevented product deployment. On the other hand, in the future, in order to support various use cases with various qualities, the sidelink communication that is used by various UE types is expected to be required. Accordingly, the resource allocation method is expected to be renewed. In addition, the Uu coverage is expected to be extended significantly by an effective use of NTN (Non-Terrestrial Network).

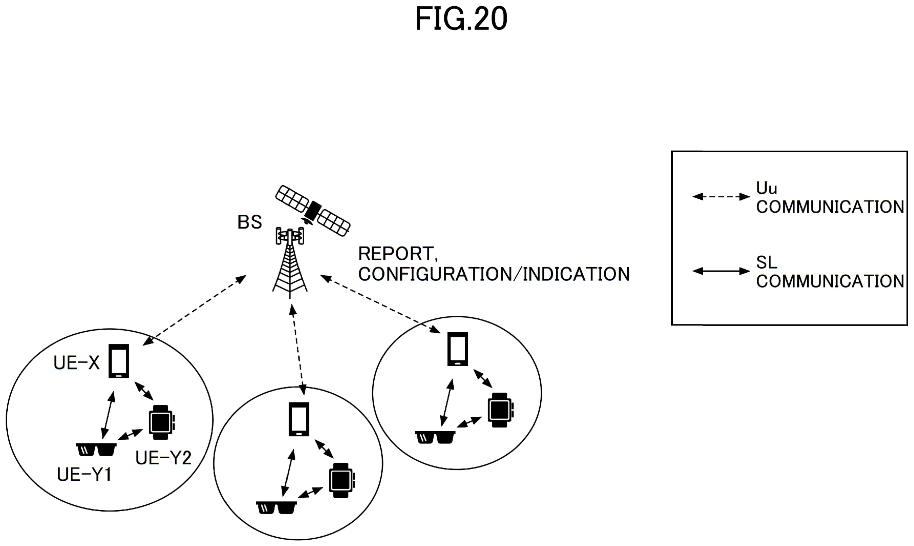

Fig. 20 is a drawing for describing an example of the communication situation in an embodiment of the present invention. As illustrated in Fig. 20, a specific UE (hereinafter, referred to as "UE-X") may report, to the base station 10 (hereinafter, also referred to as "BS (Base station)"), information related to the UE itself and another UE (hereinafter, referred to as "UE-Y (UE-Y1, UE-Y2, ...)", and may indicate information related to the UE-Y's sidelink communication to the UE-Y, based on the configuration and indication by the base station 10.

The UE-X may be allowed by the BS to perform "an operation related to the UE-Y", and the UE-Y may become a subordinate of the UE-X. The number of UE-Ys "N" may be equal to or greater than 1 and may be equal to or less than Nₘₐₓ. The Nₘₐₓ may be determined based on the capability of the UE-X, or may be determined based on the indication from the BS. It is to be noted that "the UE-Y becomes a subordinate of the UE-X" may mean that the communication of the UE-Y is controlled by the UE-X, may mean that the UE-Y performs communications based on the information received from the UE-X, may mean that the communication of the UE-Y is controlled by the BS via the UE-X, or may mean that the UE-Y transitions to a connection state with the UE-X that is connected to the BS and is allowed to perform an operation related to the UE-Y.

The sidelink communication may be also controlled by the network operator side by collecting all of the information items, and the devices that do not perform 3GPP Uu communications such as a device without SIM (Subscriber identity module) may be also supported. For example, the UE-Y may be a device that does not perform 3GPP Uu communications, or may be a device without SIM. The sidelink communication may be performed by a combination of the 5G-NR mode 1 resource allocation and the function of scheduling for another UE by a certain UE.

The UE types of the UE-X and the UE-Y may be any UE type. For example, the UE-X may be a smartphone, and the UE-Y may be a wearable device or a RedCap UE.

The BS may be a terrestrial base station, or may be a non-terrestrial base station such as a satellite, HAPS (High Altitude Platform Station), or the like. It is to be noted that the BS may be replaced with a core network function or an application layer function. The core network function may be, but is not limited to, a PCF (Policy control function) or a newly-defined sidelink control function, for example. The application layer function may be, for example, a V2X application server. In a case where the BS is replaced with the core network function or the application layer function, the signaling between the UE and the BS described below may be replaced with the NAS (Non access stratum) signaling. In addition, the UE-X may be replaced with a core network function or an application layer function.

According to the above-described operation, the various UE types, communication qualities, and use cases can be also implemented in the sidelink. For example, IoT-UE, URLLC (Ultra-Reliable and Low Latency Communications), or the like, can be implemented.

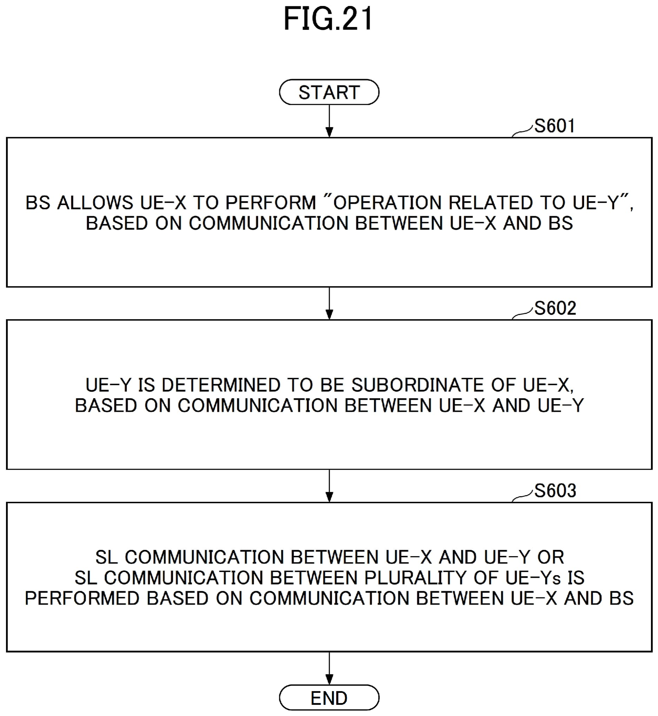

Fig. 21 is a flowchart illustrating an example (1) of communication according to an embodiment of the present invention. In step S601, the BS allows the UE-X to perform "an operation related to the UE-Y" based on the communication between the UE-X and the BS. In subsequent step S602, the UE-Y is determined to be a subordinate of the UE-X, based on the communication between the UE-X and the UE-Y. The determination may be performed by the UE-X, the UE-Y, and/or the BS. In subsequent step S603, the sidelink communication is performed between the UE-X and the UE-Y or between a plurality of UE-Ys, based on the communication between the UE-X and the BS.

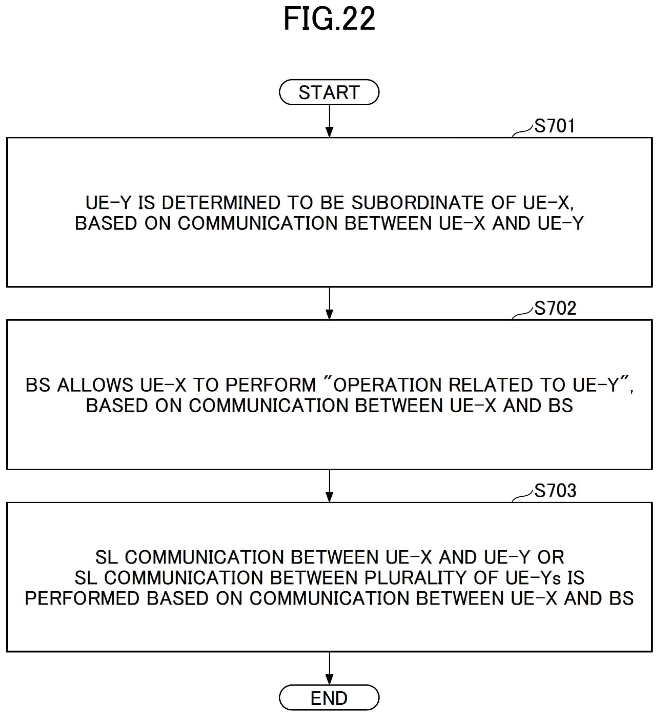

Fig. 22 is a flowchart illustrating an example (2) of communication according to an embodiment of the present invention. In step S701, the UE-Y is determined to be a subordinate of the UE-X, based on the communication between the UE-X and the UE-Y. The determination may be performed by the UE-X, the UE-Y, and/or the BS. In subsequent step S702, the BS allows the UE-X to perform "an operation related to the UE-Y" based on the communication between the UE-X and the BS. In subsequent step S703, the sidelink communication is performed between the UE-X and the UE-Y or between a plurality of UE-Ys, based on the communication between the UE-X and the BS.

Operation 1) The requirements for the UE-X will be described below.

The requirements for a UE to be a UE-X, that is, the requirements for communicating with the BS with respect to "an operation related to the UE-Y" and for capability of performing "an operation related to the UE-Y" based on the configuration and indication by the BS, may be more than one or two requirements among the following A) to F), or may be all of the requirements described in the following A) to F).
A) The UE is capable of communicating with the BS. May be capable of communicating with the BS by using a specific FR, cell, or carrier. With respect to the connection state with the BS, the case may be limited to a case in which the communication with the BS can be performed with respect to "an operation related to the UE-Y" in a state other than the RRC _CONNECTED state.
B) The UE has reported, to the BS, a capability related to execution of "an operation related to the UE-Y". "An operation related to the UE-Y" may mean a control of a sidelink signal transmission from the UE-Y to the UE-X and/or another UE-Y and/or a sidelink signal reception, or may mean to receive an indication from the BS related to a sidelink signal transmission from the UE-Y to the UE-X and/or another UE-Y and/or a sidelink signal reception and to share the indication with one or more UE-Ys.
C) Identification of UE-Ys that can be controlled by the UE itself has been completed by the UE.
D) The UE has a positioning function. The case may be limited to a case of having a sidelink positioning function. The case may be limited to a case in which the position information of the UE-Y can be measured, or a case in which information used for position measurement of the UE-Y can be reported.
E) The UE is capable of measuring and reporting the information related to a signal with respect to another UE-X or a UE-Y that is a subordinate of another UE-X (for example, interference power) .
F) The UE has received an indication related to this function (function of communicating with the BS with respect to "an operation related to the UE-Y" and of performing "an operation related to the UE-Y" based on the configuration/indication by the BS) in SIB. In other words, in a case where the UE has not received the indication, the UE is not required to be capable of transmitting a signal related to this function (for example, a request for execution) to the BS.

Operation 1) has been described above.

Operation 2) A method will be described below in which the UE-X is allowed by the BS to perform "an operation related to the UE-Y".

The UE-X may report, to the BS, at least one of the following A) to H).
A) Information that is measured based on a signal received from the BS. For example, the information may be RSRP (Reference signal received power), RSRQ (reference signal received quality), RSSI (Received signal strength indicator), CQI (Channel quality indicator), CSI (Channel state information), or the like.
B) Information that is measured based on a signal received from another UE. For example, the information may be RSRP, RSRQ, RSSI, CQI, CSI, or the like.
C) Information that is measured based on a signal received from another UE-X. For example, the information may be RSRP, RSRQ, RSSI, CQI, CSI, or the like.
D) Information related to communication requirements between the UE-X and the subordinate UE-Y or between the subordinate UE-Ys. For example, the information may be a priority, a QoS indicator, or the like.
E) Parameter required for the communication between the UE-X and the subordinate UE-Y or between the subordinate UE-Ys. For example, the parameter may be a time and/or frequency resource, transmission power, a resource period, or the like.
F) Information related to the UE-Y. For example, the information may be a capability, a UE type, the number of UEs, or the like.
G) Position information of the UE-X and/or the UE-Y, or information used for position measurement of the UE-X and/or the UE-Y. For example, the information may be information related to RX-TX time difference, RSRP, angles, etc.
H) Request for execution of "an operation related to the UE-Y".

The report from the UE-X to the BS may be performed by using at least one of the following signaling: RRC signaling; MAC signaling (for example, MAC-CE); and PHY signaling (for example, UCI).

The priority of the reporting operation may be determined by one of the following A) to C).
A) The priority may be determined based on the priority in the communication between the UE-X and the subordinate UE-Y or between the subordinate UE-Ys.
B) The priority that is defined in the technical specification may be used. For example, the priority may be lower than the priority of CCCH (Common control channel) or may be lower than the priority of MAC-CE related to the Uu communication.
C) The priority that is configured by the BS may be used.

The UE-X may receive information related to allowing or non-allowing of "an operation related to the UE-Y" from the BS, or allowing or non-allowing may be performed by at least one of the following signaling: RRC signaling; MAC signaling (for example, MAC-CE); and PHY signaling (for example, DCI).

The UE-X may assume that execution of "an operation related to the UE-Y" is not allowed in a case where the UE-X has tried but failed to receive information related to allowing the execution of "an operation related to the UE-Y" from the BS. The UE-X may assume that execution of "an operation related to the UE-Y" is not allowed in a case where the allowing information is not received before an elapse of time T from the timing related to the transmission of a request for execution of "an operation related to the UE-Y". With respect to the time T, a timer function defined in the RRC layer may be applied. The UE-X may re-transmit the request for execution of "an operation related to the UE-Y". The maximum number of transmissions of the request for execution of "an operation related to the UE-Y" may be defined, and, in a case where the number of requests for execution reaches the maximum number, the request is not required to be transmitted at least during a predetermined period.

The UE-X may receive at least one of the following information items from the BS in addition to, or as an alternative to, the information related to allowing or non-allowing of "an operation related to the UE-Y" from the BS: A (time, frequency, and/or code) resource that can be used; a signal sequence; a cell ID; maximum transmission power; priority that can be used for communications with UE-Y; achievable communication quality; information related to beams; an area and/or location in which "an operation related to the UE-Y" can be performed; the type of UE-Y that can be a subordinate; the capability of UE-Y that can be a subordinate (for example, one of the UE-Y requirements described below is satisfied); an area and/or location of UE-Y that can be a subordinate; and information related to an operation of the BS and/or the UE-X related to the UE-Y sidelink communication control.

Operation 2) has been described above.

Operation 3) The requirements for the UE-Y will be described below.

The requirements for a certain UE to be a UE-Y, that is, the requirements for performing the sidelink communication with the UE-X and/or another UE-Y based on a signal from the UE-X (a signal according to "an operation related to the UE-Y" by the UE-X) may be at least one of the following A) to E).
A) The UE is determined to become, or determined to be capable of becoming, a subordinate of the UE-X according to the communication with the UE-X. The requirements may be the PC-5RRC connection between the UE and the UE-X having been established.
B) The UE is capable of performing communication (for example, direct communication) with the BS. The BS may be a BS that the UE-X described in the above-described A) is connected to, or may be a BS that is different from the BS that the UE-X described in the above-described A) is connected to. The requirements may be capable of communicating with the BS by using a specific FR, cell, or carrier. The case may be limited to a case in which the UE is allowed by the BS to perform an operation as a UE-Y.
C) The UE is incapable of performing, or does not perform, communication (for example, direct communication) with the BS. For example, the UE may be a UE without SIM.
D) The UE is not in a connected state with the BS. Reception of broadcast information from the BS may be performed.
E) The UE is a specific UE type. For example, the UE may be an IoT-UE.

Operation 3) has been described above.

Operation 4) The requirements for the UE-Y to become a subordinate of the UE-X will be described.

In step S602 in Fig. 21, an operation of the UE-Y becoming a subordinate of the UE-X may be performed in the following step 11) to step 13).

Step 11) The UE-X transmits a sidelink broadcast signal based on the information related to "an operation related to the UE-Y" (for example, the sidelink resource that can be used) indicated by the BS. The information related to "an operation related to the UE-Y" indicated by the BS may be included in the sidelink broadcast signal.

Step 12) The UE-Y monitors and receives the sidelink broadcast signal from the UE-X, and transmits a request for becoming a subordinate of the UE-X to the UE-X, based on the received information. The request signal may be a sequence signal or a PRACH for sidelink, and may be transmitted via a control channel and/or shared channel. Together with, or separately from, the request signal, the information related to the UE-Y as described in the following A) to E) may be transmitted to the UE-X.
A) Information that is measured based on a signal received from the UE-X. For example, the information may be RSRP, RSRQ, RSSI, or the like.
B) Information related to communication requirements between the UE-X and the UE-Y itself or between another UE-Y and the UE-Y itself. For example, the information may be a priority, a QoS indicator, or the like.
C) Parameter required for the communication between the UE-X and the UE-Y itself or between another UE-Y and the UE-Y itself. For example, the parameter may be a time and/or frequency resource, transmission power, a resource period, or the like.
D) Capability, UE type, which BS or which PLMN (Public Land Mobile Network) is to be connected to, and/or presence or absence of the connection.
E) The UE-Y position information, a signal used for position measurement (for example, reference signal), or information used for the position measurement (for example, information related to RX-TX time difference, RSRP, or angles)

Step 13) The UE-X monitors and receives the request signal from the UE-Y. The UE-X transmits, to the UE-Y, an indication of causing the UE-Y to become a subordinate, based on the received information. The UE-Y receives the indication.

In step S701 in Fig. 22, an operation of the UE-Y becoming a subordinate of the UE-X may be performed in the following step 21) to step 23).

Step 21) The UE-X transmits a sidelink broadcast signal by using a resource for the initial communication that is allocated before the UE-Y is determined to be a subordinate. The resource for the initial communication may be a resource determined by a (pre-) configuration, may be a resource configured for the UE-X and/or the UE-Y by the BS, or may be a sidelink exceptional pool.

Step 22) The UE-Y monitors and receives the sidelink broadcast signal from the UE-X, and transmits a request for becoming a subordinate of the UE-X to the UE-X by using the resource for the initial communication, based on the received information. The request signal may be a sequence signal or a PRACH for sidelink, and may be transmitted via a control channel and/or shared channel. Together with, or separately from, the request signal, the information related to the UE-Y as described in the following A) to E) may be transmitted to the UE-X.
A) Information that is measured based on a signal received from the UE-X. For example, the information may be RSRP, RSRQ, RSSI, or the like.
B) Information related to communication requirements between the UE-X and the UE-Y itself or between another UE-Y and the UE-Y itself. For example, the information may be a priority, a QoS indicator, or the like.
C) Parameter required for the communication between the UE-X and the UE-Y itself or between another UE-Y and the UE-Y itself. For example, the parameter may be a time and/or frequency resource, transmission power, a resource period, or the like.
D) Capability, UE type, which BS or which PLMN is to be connected to, and/or presence or absence of the connection.
E) The UE-Y position information, a signal used for position measurement (for example, reference signal), or information used for the position measurement (for example, information related to RX-TX time difference, RSRP, or angles)

Step 23) The UE-X monitors and receives the request signal from the UE-Y by using the resource for the initial communication. The UE-X transmits, to the UE-Y, an indication of causing the UE-Y to become a subordinate by using the resource for the initial communication, based on the received information. The UE-Y receives the indication by using the resource for the initial communication.

Operation 4) has been described above.

Operation 5) Information transmitted from the UE-X to the base station will be described below.

After the completion of the above-described step 11) and the above-described step 12), the UE-X may report, to the BS, at least one of the information items reported from the UE-X to the BS in the above-described operation 2). In addition, after the completion of the above-described step 21) and the above-described step 22), the UE-X may report, to the BS, at least one of the information items reported from the UE-X to the BS in the above-described operation 2). Information related to the report (for example, report contents, time and frequency resources used for the report, or the like) may be configured and/or indicated by the BS, and the report contents may be different from the information that is actually reported in the above-described operation 2). With respect to the signaling and/or priority applied for the report from the UE-X to the BS, the signaling and/or the priority in the above-described operation 2) may be applied, the signaling and/or priority applied for the report from the UE-X to the BS may be different from the signaling and/or priority that is actually applied in the above-described operation 2).

The UE-X may report, to the BS, at least one information item from among the information items that are to be reported from the UE-X to the BS in the above-described operation 2) and/or the communication request or scheduling request by the UE-Y, during the execution of the above-described step 13) or the above-described step 23). Information related to the report (for example, report contents, time and frequency resources used for the report, the report period, or the like) may be configured and/or indicated by the BS, and the report contents may be different from the information that is actually reported in the above-described operation 2). With respect to the signaling and/or priority applied for the report from the UE-X to the BS, the signaling and/or the priority in the above-described operation 2) may be applied, the signaling and/or priority applied for the report from the UE-X to the BS may be different from the signaling and/or priority that is actually applied in the above-described operation 2). The changed information may be reported to the BS only in a case where there is a change from the report contents in the past.

The terminal information of the UE-Y (for example, SIM information) may or may not be transmitted from the UE-X to the BS.

Operation 5) has been described above.

Operation 6) Information received by the UE-X from the base station will be described below.

After the completion of the above-described step 11) and the above-described step 12), the UE-X may receive, from the BS, at least one of the information items indicated from the BS to the UE-X in the above-described operation 2). In addition, after the completion of the above-described step 21) and the above-described step 22), the UE-X may receive, from the BS, at least one of the information items indicated from the BS to the UE-X in the above-described operation 2). Information related to the indication (for example, the time and frequency resources used for the indication, or the like) may be configured and/or indicated by the BS, and the received contents may be different from the information that is actually received in the above-described operation 2). With respect to the signaling and/or priority applied for the indication from the BS to the UE-X, the signaling and/or the priority in the above-described operation 2) may be applied, and the signaling and/or priority applied for the indication from the BS to the UE-X may be different from the signaling and/or priority that is actually applied in the above-described operation 2). The UE-X may perform the operation 5) again or may stop the operation in a case where the indication is not received by the UE-X.

The UE-X may receive, from the BS, at least one information item from among the information items indicated from the BS to the UE-X in the above-described operation 2) during the execution of the above-described step 13) or the above-described step 23). Information related to the indication (for example, the time and frequency resources used for the indication, the indication period, or the like) may be configured and/or indicated by the BS, and the received contents may be different from the information that is actually received in the above-described operation 2). With respect to the signaling and/or priority applied for the indication from the BS to the UE-X, the signaling and/or the priority in the above-described operation 2) may be applied, and the signaling and/or priority applied for the indication from the BS to the UE-X may be different from the signaling and/or priority that is actually applied in the above-described operation 2). In a case where the indication is not received by the UE-X: the UE-X may continue the operation based on the most recent indication from the BS; the UE-X may continue the operation based on the most recent indication from the BS for a predetermined period and may end the operation if the predetermined period is exceeded; or the UE-X may end the operation.

Operation 6) has been described above.

Operation 7) The state of the connection with the base station in a case where the UE operates as a UE-X will be described below.

In a case where the BS allows the UE-X to perform "an operation related to the UE-Y" based on the communication between the UE-X and the BS in step S601 in Fig. 21 or in step S702 in Fig.22, the connection state between the UE-X and the BS may be an RRC _CONNECTED state, may be an RRC _INACTIVE state, or an RRC _SIDELINK state.

The RRC _SIDELINK state may be newly defined for the sake of information reception from the BS related to the sidelink communication control of the UE-Y and/or information transmission to the BS related to the sidelink communication control of the UE-Y. When having transitioned to the RRC _SIDELINK state, all of or a part of the operations related to the data transmission and/or the data reception by the UE-X itself is not required to be performed. For example, the UE in the RRC_SIDELINK state may perform: an operation similar to the operation in the RRC _INACTIVE state; and an operation related to the information reception from the BS related to the sidelink communication control of the UE-Y and/or the information transmission to the BS related to the sidelink communication control of the UE-Y.

In a case of "performing the sidelink communication between the UE-X and the UE-Y or between a plurality of UE-Ys based on the communication between the UE-X and the BS" in step S603 in Fig. 21 or step S703 in Fig. 22, the connection state between the UE-X and the BS may be an RRC _CONNECTED state, may be an RRC_INACTIVE state, or may be an RRC _SIDELINK state.

The RRC state in a case where the BS allows the UE-X to perform "an operation related to the UE-Y" based on the communication between the UE-X and the BS in step S601 in Fig. 21 or in step S702 in Fig. 22 may be different from the RRC state in a case of "performing the sidelink communication between the UE-X and the UE-Y or between a plurality of UE-Ys based on the communication between the UE-X and the BS" in step S603 in Fig. 21 or in step S703 in Fig. 22.

Operation 7) has been described above.

Operation 8) Indication from the UE-X to the UE-Y will be described below.

In the above-described step S603 or in the above-described step S703, the UE-X may perform transmission to the UE-Y by using one of the following A) to C) and the UE-Y may perform transmission or reception of signals to or from the UE-X or another UE-Y based on the received information.
A) After transmitting the communication request by the UE-Y to the BS, the UE-X transmits, to the UE-Y, the scheduling information for the UE-Y received from the BS without change. In other words, the BS performs the scheduling.
B) After transmitting the communication request by the UE-Y to the BS, the UE-X transmits, to the UE-Y, one of the scheduling candidates for the UE-Y received from the BS. In other words, the UE-X receives a plurality of scheduling candidates from the BS and determines one of the candidates.
C) The UE-X transmits the scheduling information to the UE-Y after the reception of the communication request from the UE-Y, based on the configuration by the BS.

It is to be noted that, in a case of the communication between the UE-Y1 and the UE-Y2, the UE-X may perform one of the above-described A) to the above-described C) for both the UE-Y1 and the UE-Y2, or may perform one of the above-described A) to the above-described C) for the transmission-side UE and the receptionside UE may perform blind decoding.

It is to be noted that the scheduling information may be, for example: resources in the time domain, the frequency domain, the code domain, and/or the space domain; MCS; beams; power; periodicity; priority; or the like.

Operation 8) has been described above.

Operation 9) An operation in a case where the UE-X becomes out of coverage will be described below.

The UE-X may perform communication with the UE-Y by using the resources to be used at the time of out of coverage. The resources to be used at the time of out of coverage may be resources for the initial communication, or may be a sidelink exceptional pool. In a case of still out of coverage after an elapse of a predetermined period, the UE-X may stop the operation as a UE-X.

The UE-X may continue the communication with the UE-Y based on the information configured and/or indicated by the BS. In a case of still out of coverage after an elapse of a predetermined period, the UE-X may stop the operation as a UE-X.

The UE-X may indicate, to the subordinate UE-Y, that the UE-X is out of coverage and/or the UE-X ends an operation as a UE-X. In a case where the UE-Y cannot receive a signal from the UE-X for a certain period of time and/or in a case where the UE-Y receives the above-described indication, the UE-Y may determine that the UE-X becomes out of coverage and/or the UE-X has ended an operation as a UE-X and may get out of the subordinate of the UE-X.

Operation 9) has been described above.

It is to be noted that although the conventional structures of an SL channel and an SL signal are used in an embodiment of the present invention, the structures are not limited to the conventional structures. For example, an embodiment of the present invention may be applied to a case in which an interlaced channel is applied as a configuration for satisfying the OCB requirements.

It is to be noted that an embodiment of the present invention may be applied by limiting the case to a case in which a predetermined condition is satisfied. For example, an embodiment of the present invention may be applied by being associated with a predetermined SL channel or SL signal. For example, an embodiment of the present invention may be applied to any one of PSCCH/PSSCH, PSFCH, S-SSB, and SL positioning RS. For example, an embodiment of the present invention may be applied based on a predetermined configuration or preconfiguration. For example, an embodiment of the present invention may be applied to a case in which "enabling" of an embodiment of the present invention is provided by a configuration or preconfiguration. For example, in a case where the LBT method related to the second SL transmission is not Type 1, or has become a type other than Type 1, an embodiment of the present invention is not required to be applied.

It is to be noted that, in order to apply LBT Type 2A, 2B, or 2C, an additional transmission (additional TX) such as a CP extension, may be performed immediately before the transmission P.

It is to be noted that the UE capability related to the applicability or operation of an embodiment of the present invention may be defined, and may or may not be reported to the base station 10 and/or the terminal 20.

It is to be noted that the SL transmission by the UE may be one of PSCCH, PSSCH, PSFCH, S-SSB, or SL-PRS, and a different channel or signal may be applied to each operation of the present embodiment.

It is to be noted that at least one of the UE SL transmissions may be a UL transmission.

An embodiment of the present invention may be applied to any one of resource selection, resource reselection, reevaluation, or preemption check.

It is to be noted that a method of an embodiment of the present invention is not limited to being applied to the above-described case of device-to-device direct communication, and may be applied to other similar cases.

The application of the above-described embodiments is not limited to the V2X terminal, and the above-described embodiments may be applied to terminals performing D2D communication.

According to an embodiment of the present invention, a certain UE can perform sidelink resource allocation with high flexibility for another UE according to the control by the network.

In other words, the efficient sidelink communication can be implemented based on the control by the network.

### (Device configuration)

Next, a functional configuration example of the base station 10 and the terminal 20 for performing the processes and operations described above will be described. The base station 10 and the terminal 20 include functions for implementing the embodiments described above. It should be noted, however, that each of the base stations 10 and the terminal 20 may include only some of the functions in an embodiment.

### <Base station 10>

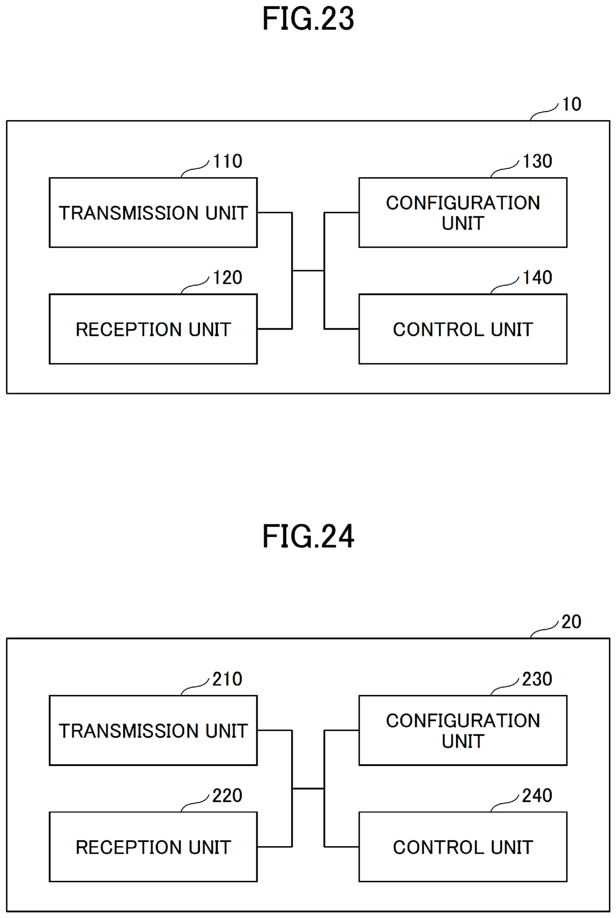

Fig. 23 is a diagram illustrating an example of a functional configuration of the base station 10. As shown in Fig. 23, the base station 10 includes a transmission unit 110, a reception unit 120, a configuration unit 130, and a control unit 140. The functional configuration illustrated in Fig. 23 is merely an example. Functional divisions and names of functional units may be anything as long as operations according to an embodiment of the present invention can be performed.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. In addition, the transmission unit 110 has a function of transmitting NR-PSS, NR-SSS, NR-PBCH, DL/UL control signals, DL reference signals, and the like to the terminal 20.

The configuration unit 130 stores preset configuration information and various configuration information items to be transmitted to the terminal 20 in a storage apparatus and reads the preset configuration information from the storage apparatus as necessary. Contents of the configuration information are, for example, information related to configuration of D2D communication, etc.

The control unit 140 performs processing related to the configuration in which the terminal 20 performs D2D communication as described in an embodiment of the present invention. In addition, the control unit 140 transmits scheduling of D2D communication and DL communication to the terminal 20 through the transmission unit 110. In addition, the control unit 140 receives information related to the HARQ response of the D2D communication and the DL communication from the terminal 20 via the reception unit 120. The functional units related to signal transmission in the control unit 140 may be included in the transmission unit 110, and the functional units related to signal reception in the control unit 140 may be included in the reception unit 120.

### <Terminal 20>

Fig. 24 is a diagram illustrating an example of a functional configuration of the terminal 20. As shown in Fig. 24, the terminal 20 includes a transmission unit 210, a reception unit 220, a configuration unit 230, and a control unit 240. The functional configuration illustrated in Fig. 24 is merely an example. Functional divisions and names of functional units may be anything as long as operations according to an embodiment of the present invention can be performed.

The transmission unit 210 generates a transmission signal from transmission data and transmits the transmission signal wirelessly. The reception unit 220 receives various signals wirelessly and obtains higher layer signals from the received physical layer signals. In addition, the reception unit 220 has a function of receiving NR-PSS, NR-SSS, NR-PBCH, DL/UL/SL control signals, DL reference signals, and the like, transmitted from the base station 10. In addition, for example, with respect to the D2D communications, the transmission unit 210 transmits, to another terminal 20, PSCCH (Physical Sidelink Control Channel), PSSCH (Physical Sidelink Shared Channel), PSDCH (Physical Sidelink Discovery Channel), PSBCH (Physical Sidelink Broadcast Channel), etc., and the reception unit 220 receives, from the another terminal 20, PSCCH, PSSCH, PSDCH, PSBCH, or the like.

The configuration unit 230 stores various configuration information received from the base station 10 or the terminal 20 by the reception unit 220 in the storage apparatus and reads them from the storage apparatus as necessary. In addition, the configuration unit 230 also stores pre-configured configuration information. Contents of the configuration information are, for example, information related to configuration of D2D communication, etc.

The control unit 240 controls D2D communication for establishing RRC connection with another terminal 20 as described in an embodiment of the present invention. Further, the control unit 240 performs processing related to the power-saving operation. Further, the control unit 240 performs HARQ related processing of the D2D communication and DL communication. Further, the control unit 240 transmits, to the base station 10, information related to the HARQ response of the D2D communication to the other terminal 20 and the DL communication scheduled by the base station 10. Further, the control unit 240 may perform scheduling of D2D communication for another terminal 20. In addition, the control unit 240 may autonomously select a resource to be used for D2D communication from the resource selection window based on the sidelink sensing result or may perform reevaluation or preemption. Further, the control unit 240 performs processing related to power saving in transmission and reception of D2D communications. In addition, the control unit 240 performs processing related to inter-terminal coordination in D2D communication. In addition, the control unit 240 performs a process related to LBT in the D2D communication. The functional units related to signal transmission in the control unit 240 may be included in the transmission unit 210, and the functional units related to signal reception in the control unit 240 may be included in the reception unit 220.

### (Hardware structure)

The block diagrams that have been used to describe the above embodiments (Fig. 23 and Fig. 24) show blocks in functional units. These functional blocks (components) may be implemented in arbitrary combinations of at least one of hardware or software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

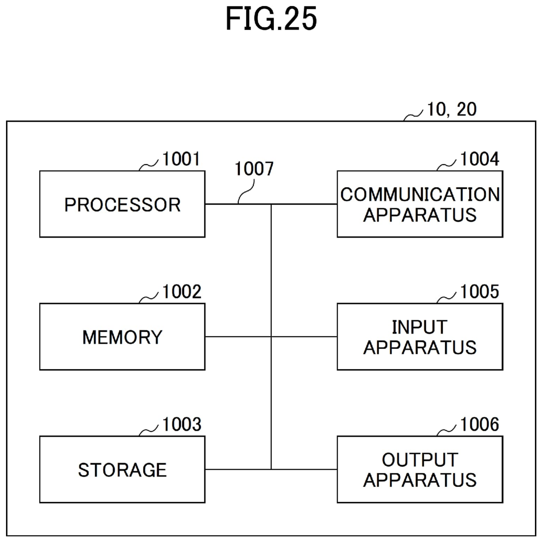

For example, the base station 10, the terminal 20, etc., according to an embodiment of the present disclosure may function as a computer for processing the radio communication method of the present disclosure. Fig. 25 is a diagram to show an example of a hardware structure of the base station 10 and the terminal 20 according to one embodiment. Physically, the above-described base station 10 and terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the terminal 20 may be configured to include one or more of apparatuses shown in the drawings, or may be configured not to include part of apparatuses.

Each function of the base station 10 and the terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading or writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described control unit 140, control unit 240, and so on may be implemented by the processor 1001.

Furthermore, the processor 1001 reads programs (program codes), software modules, data, or the like, from at least one of the storage 1003 and the communication apparatus 1004, into the memory 1002, and executes various processes according to these. As for the programs, programs to allow computers to execute at least part of the operations of the above-described embodiments are used. For example, the control unit 140 of the base station 10 illustrated in Fig. 23 may be implemented by control programs that are stored in the memory 1002 and that operate on the processor 1001. In addition, for example, the control unit 240 of the terminal 20 illustrated in Fig. 24 may be implemented by control programs that are stored in the memory 1002 and that operate on the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), or other appropriate storage media. The memory 1002 may be referred to as a "register," a "cache," a "main memory (primary storage apparatus)" and so on. The memory 1002 can store executable programs (program codes), software modules, and the like for implementing the communication method according to one embodiment of the present disclosure.

The storage 1003 is a computer-readable recording medium, and may be constituted with, for example, at least one of a flexible disk, a floppy (registered trademark) disk, a magnetooptical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, or other appropriate storage media. The above recording medium may be a database including the memory 1002 and/or the storage 1003, a server, or any other appropriate medium.

The communication apparatus 1004 is hardware (transmitting/receiving device) for allowing inter-computer communication via at least one of wired or wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) or time division duplex (TDD). For example, the transmitting/receiving antenna, the amplifier unit, the transmitting/receiving unit, the transmission line interface, and the like, may be implemented by the communication apparatus 1004. The transmitting/receiving unit may be physically or logically divided into a transmitting unit and a receiving unit.

The input apparatus 1005 is an input device that receives input from the outside (for example, a keyboard, a mouse, a microphone, a switch, a button, a sensor, and so on). The output apparatus 1006 is an output device that outputs something to the outside (for example, a display, a speaker, an LED lamp). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

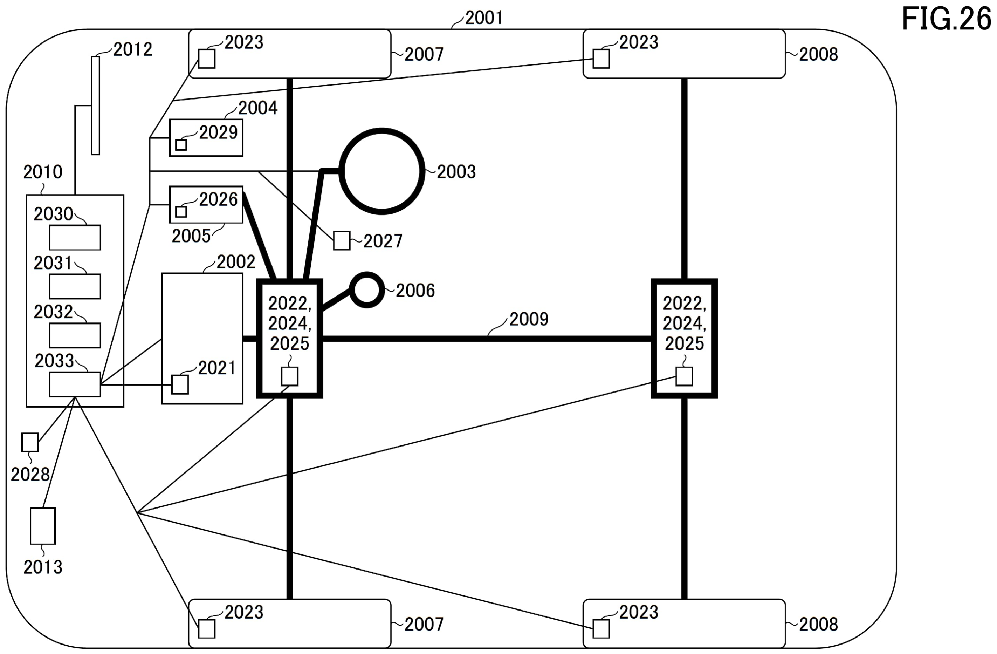

Fig. 26 shows an example of a configuration of a vehicle 2001. As shown in Fig. 26, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021-2029, an information service unit 2012, and a communication module 2013. The aspects/embodiments described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from a drive unit 2002, a steering unit 2003, an accelerator pedal 2004, a brake pedal 2005, a shift lever 2006, front wheels 2007, rear wheels 2008, an axle 2009, a microprocessor 2031 and a memory (ROM, RAM) 2032 in the electronic control unit 2010, and sensors 2021 to 2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, and information based on an input from the outside (a user) obtained via the information service unit 2012, to the external apparatus via radio communication. The electronic control unit 2010, the various sensors 2021 to 2028, the information service unit 2012, and the like may be referred to as input units that receive input. For example, the PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to devices, such as a display, a speaker, or the like, based on the PDSCH received by the communication module 2013 (or data/information decoded from the PDSCH)). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021-2029, etc., mounted in the vehicle 2001.

### (Embodiment summary)

As described above, according to an embodiment of the present invention, a terminal is provided. The terminal includes: a reception unit configured to receive a broadcast signal from another terminal; and a transmission unit configured to transmit, to the another terminal, a request signal for becoming a subordinate. The reception unit receives, from the another terminal, an indication indicating that the terminal is to be a subordinate of the another terminal.

According to the above-described configuration, a certain UE can perform sidelink resource allocation with high flexibility for another UE according to the control by the network. In other words, the efficient sidelink communication can be implemented based on the control by the network.

The transmission unit may transmit a communication request to at least one of the another terminal, a base station, or a core network function, and the reception unit may receive scheduling information from at least one of the another terminal, the base station, or the core network function. According to the above-described configuration, a certain UE can perform sidelink resource allocation for another UE according to the control by the network.

The reception unit and the transmission unit are not required to perform direct communication with a base station. According to the above-described configuration, a certain UE can perform sidelink resource allocation for a UE that does not communicate with a base station according to the control by the network.

The transmission unit may transmit, to at least one of the another terminal, a base station or a core network function, information related to requirements for communication with the another terminal. According to the above-described configuration, a certain UE can perform sidelink resource allocation for another UE according to the control by the network.

In a case where the reception unit cannot receive a signal from the another terminal for a certain period, the terminal may ceases to be the subordinate of the another terminal. According to the above-described configuration, a certain UE can get out of a subordinate of the another UE that performs sidelink resource allocation.

In addition, according to an embodiment of the present invention, a communication method performed by a terminal is provided. The communication method includes: receiving a broadcast signal from another terminal; transmitting, to the another terminal, a request signal for becoming a subordinate; and receiving, from the another terminal, an indication indicating that the terminal is to be a subordinate of the another terminal.

According to the above-described configuration, a certain UE can perform sidelink resource allocation with high flexibility for another UE according to the control by the network. In other words, the efficient sidelink communication can be implemented based on the control by the network.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described related to an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may each be stored in a random access memory (RAM), a flash memory, a read only memory (ROM), an EPROM, an EEPROM, a register, a hard disk (HDD), a removable disk, a CD-ROM, a database, a server, or any other appropriate recording medium.

In addition, notification of information is by no means limited to the aspects/embodiments described in the present disclosure, and other methods may be used as well. For example, the information indication may be performed by physical layer signaling (e.g., DCI (Downlink Control Information), UCI (Uplink Control Information)), higher layer signaling (e.g., RRC (Radio Resource Control) signaling, MAC (Medium Access Control) signaling, broadcast information (MIB (Master Information Block), SIB (System Information Block))), other signals, or combinations thereof. Also, RRC signaling may be referred to as an "RRC message," and can be, for example, an RRC connection setup message, an RRC connection reconfiguration message, and so on.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. In addition, a plurality of systems may be combined (for example, a combination of: at least one of LTE or LTE-A; and 5G, and the like) to be applied.

The order of processes, sequences, flowcharts, and so on that have been used to describe the aspects/embodiments in the present specification may be re-ordered as long as inconsistencies do not arise. For example, although various methods have been illustrated in the present disclosure with various components of steps in exemplary orders, the specific orders that are illustrated herein are by no means limiting.

Operations which have been described in the present specification to be performed by a base station 10 may, in some cases, be performed by an upper node of the base station 10. In a network including one or a plurality of network nodes with base stations 10, it is clear that various operations that are performed to communicate with terminals 20 can be performed by base stations 10, one or more network nodes (for example, Mobility Management Entities (MMEs), Serving-Gateways (S-GWs), and so on may be possible, but these are not limiting) other than base stations 10, or combinations of these. According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in the present disclosure may be implemented by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because various channels (e.g., PUCCH, PDCCH, or the like) and information elements may be identified by any suitable names, the various names assigned to these various channels and information elements are not used as limitations.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station or a base station subsystem that provides communication services within this coverage.

In the present disclosure, transmitting information to the terminal by the base station may be referred to as instructing the terminal to perform any control and/or operation based on the information by the base station.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station or a mobile station may be referred to as a "transmitting apparatus," a "receiving apparatus," a "radio communication apparatus," and so on. Note that at least one of a base station or a mobile station may be a device mounted on a moving object or a moving object itself, and so on. The mobile station is an object that can move, and the moving speed can be any speed. In addition, a mobile station that is not moving is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station or a mobile station also includes an apparatus which does not necessarily move during communication operation. For example, at least one of the base station or the mobile station may be an IoT (Internet of Things) device such as a sensor.

Furthermore, the base station in the present disclosure may be interpreted as a user terminal. For example, each aspect/embodiment of the present disclosure may be applied to the structure in which communications between a base station and a user terminal is replaced with communications between a plurality of terminals 20 (for example, which may be referred to as Device-to-Device (D2D), Vehicle-to-Everything (V2X), and the like). In this case, terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station may have the functions of the user terminal described above.

As used herein, the term "determining" may encompasses a wide variety of actions. For example, "determining" may be regarded as judging, calculating, computing, processing, deriving, investigating, looking up (search, inquiry) (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot," and so on, depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) that does not depend on the numerology.

Numerology may be a communication parameter applied to at least one of transmission or reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, or the like.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as PDSCH (or PUSCH) mapping type A. A PDSCH (or PUSCH) transmitted using a mini-slot may be referred to as PDSCH (or PUSCH) mapping type B.

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a transmission time interval, "TTI," a plurality of consecutive subframes may be referred to as a "TTI," or one slot or one mini-slot may be referred to as a "TTI." In other words, at least one of a subframe or a TTI may be a subframe (1 ms) in the conventional LTE, may be a period shorter than 1 ms (for example, 1 to 13 symbols), or may be a period longer than 1 ms. It is to be noted that the unit representing TTI may be referred to as a slot, a mini-slot, or the like, instead of a subframe.

Here, a TTI refers to the minimum time unit of scheduling in radio communication, for example. For example, in LTE systems, a base station performs, for each terminal 20, scheduling of allocating radio resources (such as a frequency bandwidth and transmission power that can be used by each terminal 20) in TTI units. It is to be noted that the definition of the TTI is not limited to the above-described definition.

The TTI may be a transmission time unit for channel-encoded data packets (transport blocks), code blocks, codewords, or the like, or may be a unit of processing in scheduling, link adaptation, or the like. It is to be noted that, when a TTI is provided, a time period (for example, the number of symbols) to which transport blocks, code blocks, codewords, or the like are actually mapped may be shorter than the TTI.

It is to be noted that, in a case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a normal TTI (TTI in LTE Rel. 8 to Rel. 12), a long TTI, a normal subframe, a long subframe, a slot, or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

It is to be noted that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and having a TTI length equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of the numerology, and may be 12, for example. The number of subcarriers included in an RB may be determined based on the numerology.

In addition, an RB may include one or a plurality of symbols in the time domain, and may have a length of one slot, one mini-slot, one subframe, or one TTI. One TTI, one subframe, and the like, may each be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (Res). For example, one RE may correspond to a radio resource area including one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be identified by an RB index based on the common reference point of the carrier. PRBs may be defined by a certain BWP and may be numbered in the BWP.

A BWP may include a BWP for UL (UL BWP) and a BWP for DL (DL BWP). One or a plurality of BWPs may be configured in one carrier for a terminal 20.

At least one of configured BWPs may be active, and a terminal 20 is not required to expect to transmit/receive a certain signal/channel outside the active BWP. It is to be noted that that a "cell", a "carrier", or the like, in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

### DESCRIPTION OF THE REFERENCE NUMERALS

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Memory
1003 Storage
1004 Communication apparatus
1005 Input apparatus
1006 Output apparatus
2001 Vehicle
2002 Drive unit
2003 Steering unit
2004 Accelerator pedal
2005 Brake pedal
2006 Shift lever
2007 Front wheel
2008 Rear wheel
2009 Axle
2010 Electronic control unit
2012 Information service unit
2013 Communication module
2021 Current sensor
2022 Revolution sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port (IO port)

## Claims

1. A terminal comprising:
a reception unit configured to receive a broadcast signal from another terminal; and
a transmission unit configured to transmit, to the another terminal, a request signal for becoming a subordinate, wherein
the reception unit receives, from the another terminal, an indication indicating that the terminal is to be a subordinate of the another terminal.

2. The terminal as claimed in claim 1,
wherein
the transmission unit transmits a communication request to at least one of the another terminal, a base station, or a core network function, and
the reception unit receives scheduling information from at least one of the another terminal, the base station, or the core network function.

3. The terminal as claimed in claim 1,
wherein
the reception unit and the transmission unit do not perform direct communication with a base station.

4. The terminal as claimed in claim 1,
wherein
the transmission unit transmits, to at least one of the another terminal, a base station, or a core network function, information related to requirements for communication with the another terminal.

5. The terminal as claimed in claim 1,
wherein
in a case where the reception unit cannot receive a signal from the another terminal for a certain period, the terminal ceases to be the subordinate of the another terminal.

6. A communication method performed by a terminal, the communication method comprising:
receiving a broadcast signal from another terminal;
transmitting, to the another terminal, a request signal for becoming a subordinate; and
receiving, from the another terminal, an indication indicating that the terminal is to be a subordinate of the another terminal.
